# EUROPÄISCHE PATENTSCHRIFT

(11) **EP 0 784 167 B1**
(45) Veröffentlichungstag und Bekanntmachung des Hinweises auf die Patenterteilung: **23.08.2000**
(21) Anmeldenummer: 97100227.4
(22) Anmeldetag: 09.01.1997
(51) Int. Cl.: F16H 25/20

(54) **Lineargetriebeeinheit**
Transmission device for linear drive
Dispositif de transmission pour entraînement linéaire

(30) Priorität: 11.01.1996 DE 19600737
(43) Veröffentlichungstag der Anmeldung: 16.07.1997
(73) Patentinhaber: Alltec GmbH, 71111 Waldenbuch (DE)
(72) Erfinder:
(74) Vertreter: Patentanwälte Ruff, Beier, Schöndorf und Mütschele

(56) Entgegenhaltungen:
- EP-A- 0 327 705
- EP-A- 0 482 268
- DE-C- 4 120 500
- US-A- 3 109 335

## Beschreibung

Die vorliegende Erfindung betrifft eine Lineargetriebeeinheit mit einem Rahmen und einer drehbar an dem Rahmen gelagerten Spindel mit einer zugehörigen Spindelmutter.

Derartige Lineargetriebeeinheiten dienen der Umwandlung einer rotatorischen Bewegung in eine translatorische Bewegung und werden häufig für den Antrieb von Maschinenelementen verwendet, die mittels eines Kraftübertragungselementes mit der Spindelmutter verbunden werden, wobei die Spindel zumeist von einem Elektromotor, ggf. auch von Hand angetrieben wird. In der Praxis sind Lineargetriebeeinheiten bekannt, deren Spindel mit der dazugehörigen Spindelmutter in einem rohrförmigen Gehäuse aufgenommen und an diesem drehbar gelagert ist. Das Gehäuse weist einen Längsschlitz auf, durch den sich das mit der Spindelmutter verbundene Kraftübertragungselement erstreckt. Um das Eindringen von Staub und Schmutz in das Gehäuse zu verhindern, ist der Längsschlitz beidseitig des Kraftübertragungselementes häufig mit mehr oder weniger komplizierten Verschlußbandeinrichtungen verschlossen.

Eine Lagerung der Spindel nur an deren Endbereichen erweist sich als problematisch insbesondere bei der Verwendung von längeren, dünneren Spindeln und deren Antrieb mit höheren Drehzahlen, da sich die Spindel in diesem Falle durchbiegen kann und leicht in Schwingungen versetzt wird, wodurch die Spindel und die dazugehörige Spindelmutter sowie das Gehäuse übermäßig beansprucht und beschädigt werden können. Um dies zu verhindern, muß die Spindel in den Bereichen zwischen der Spindelmutter und den endseitigen Lagern der Spindel zusätzlich radial abgestützt werden. Da sich die Länge dieser Bereiche der Spindel mit der Stellung der Spindelmutter ändert, muß auch die Abstützung der Spindel entsprechend der Stellung der Spindelmutter wandern, um eine Behinderung der Längsbewegung zu vermeiden.

Aus der EP-A-0327705 ist bereits eine Lineargetriebeeinheit der eingangs genannten Art bekannt geworden, deren Spindel durch mehrere auf beiden Seiten der Spindelmutter angeordnete Abstützungen radial abgestützt wird, die mit der Spindelmutter in Längsrichtung relativ zu dem Gehäuse und der Spindel verstellt werden. Während die in Bewegungsrichtung gesehen vor der Spindelmutter liegenden Abstützungen durch diese direkt angeschoben werden können, ist für die hinter der Spindelmutter liegenden Abstützungen eine recht aufwendige und komplizierte Mitnehmereinrichtung vorgesehen, um die hinter der Spindelmutter liegenden Abstützungen mit dieser mitzuschleppen. Diese Mitnehmereinrichtung ist aufwendig zu fertigen, erhöht die Anzahl der Bauteile der Lineargetriebeeinheit und zeigt darüber hinaus keine kompakte Bauform des Lineargetriebes.

Der Erfindung liegt daher die Aufgabe zugrunde, eine die Nachteile des Standes der Technik vermeidende verbesserte Lineargetriebeeinheit der eingangs genannten Art zu schaffen.

Insbesondere soll eine einfache Verstellung der Abstützung möglich sein, um die Spindel entsprechend der Stellung der Spindelmutter an verschiedenen Stellen abzustützen.

Erfindungsgemäß wird diese Aufgabe durch die Merkmale des Anspruchs 1 gelöst. Die abhängigen Ansprüche enthalten weitere Ausgestaltungen.

Die Abstützung wird also unmittelbar durch die Spindel selbst angetrieben. Insbesondere kann die Abstützung mutterartig durch das Spindelgewinde angetrieben sein und, wenn die Abstützung eine gewünschte Stellung erreicht hat, von der antreibenden Spindel entkoppelt werden, so daß sich die Spindel drehen kann, ohne die Abstützung zu bewegen. Durch den aktiven Antrieb der Abstützung durch die Spindel selbst erübrigt sich eine mit der Spindelmutter verbundene Mitnehmereinrichtung, so daß die Lineargetriebeeinheit einfach und kompakt zu bauen ist.

Um die Abstützung direkt durch die Spindel zu bewegen, kann vorzugsweise die Spindel mit einer Außenseite des Spindelgewindes von der Abstützung geklemmt werden, so daß die Abstützung in Reibschluß mit den Außenseiten der Gewindeflanken gebracht wird und als mit dem Spindelgewinde eingreifende Mutter wirkt. Zweckmäßigerweise besitzt die Abstützung eine Spindelausnehmung, in der die Spindel aufgenommen und klemmbar ist. Um die Abstützung an einer gewünschten Stelle zu halten, sind Lösemittel vorgesehen, die die Klemmung zwischen der Abstützung und dem Spindelgewinde lösen, so daß ein Drehen der Spindel keinen Vorschub der Abstützung bewirkt. Die Klemmung wird hierbei zumindest soweit gelöst, daß die Spindel in der Spindelausnehmung durchdreht und das Spindelgewinde in der Spindelausnehmung der Abstützung nicht greift.

Ein aktives Antreiben der Abstützung durch die Spindel selbst kann jedoch nicht nur durch Reibschluß und Klemmung der Außenseite des Spindelgewindes erreicht werden, vielmehr ist es auch möglich, die Abstützung formschlüssig, beispielsweise mittels eines an der Abstützung gelagerten Eingriffschiebers, der eine oder mehrere zu dem Spindelgewinde komplementäre Gewindeflanken aufweist und mit dem Spindelgewinde in Eingriff bringbar ist, an die Spindel anzukoppeln. In diesem Falle können die Lösemittel eine Bewegungseinrichtung aufweisen, die den Eingriffsschieber bewegt und von dem Spindelgewinde außer Eingriff bringt. Gemäß einer vorteilhaften Ausgestaltung der Erfindung besitzt die Abstützung zwei Abstützteile die miteinander verbunden und relativ zueinander beweglich sind, wobei die beiden Abstützteile oder zumindest eines hiervon in einer ersten Stellung der beiden Abstützteile zueinander mit der Spindel in Eingriff sind, und insbesondere das Spindelgewinde klemmen, und in einer zweiten Stellung vom Antrieb durch die Spindel abgekoppelt sind.

Hierbei ist die Bezeichnung Abstützteil nicht so zu verstehen, daß beide Teile per se die Funktion des Abstützens erfüllen müssen, vielmehr kann eines der beiden auch lediglich dem Eingriff dienen und ist als Teil der Abstützung zu verstehen.

Vorzugsweise ist eine Federeinrichtung zur Vorspannung der beiden Abstützteile in eine der beiden Endstellungen, vorzugsweise in deren Eingriffsstellung, vorgesehen.

Um die Abstützung von dem Antrieb durch die Spindel zu lösen, sind die beiden Abstützteile relativ zueinander zu bewegen und in die entsprechende Stellung zueinander zu bringen, so daß der Eingriff zwischen Spindel und Abstützung gelöst ist. Die Lösemittel sind hierzu als Bewegungseinrichtung ausgebildet und wirken vorzugsweise mit der Federeinrichtung zusammen bzw. auf diese ein. Vorzugsweise besitzen die Lösemittel ein Eingriffsteil, daß in Abhängigkeit von der Längsstellung der Abstützung mit der Federeinrichtung in Eingriff gebracht wird. Dies kann in konstruktiv einfacher Weise dadurch erreicht werden, daß das Eingriffsteil fest, vorzugsweise mit einer Innenwand eines Gehäuseabschnittes verbunden, angeordnet ist und mit der Abstützung bzw. der Federeinrichtung in Eingriff gelangt, wenn die Abstützung die Position des Eingriffteils erreicht bzw. über diese Stellung verschoben wird.

Die Eingriffs lösung zwischen der Abstützung und der Spindel erfolgt hierbei dadurch, daß die Abstützung im Eingriffszustand mit der Spindel in den Wirkungsbereich der ortsfest angeordneten Lösemittel verschoben wird, in dem die Lösemittel eine Bewegung der beiden Abstützteile zueinander bewirken, so daß der Eingriff mit der Spindel gelöst wird und die Abstützung angehalten wird. Um die Abstützung aus dem Wirkungsbereich der Lösemittel hinaus zu bewegen, kann die Abstützung beispielsweise durch die Spindelmutter oder eine nachfolgende Abstützung angeschoben werden.

Um eine wirkungsvolle Klemmung des Spindelgewindes durch die Abstützung zu erzielen und gleichzeitig eine stabile in jeder beliebigen radialen Richtung wirksame Abstützung der Spindel zu erreichen, sollte die Abstützung die Spindel formgenau umgeben. Es ist daher zweckmäßig, daß die beiden Abstützteile jeweils eine Spindelausnehmung besitzen, in der die Spindel aufgenommen ist und in Spindel längsrichtung hintereinander auf der Spindel angeordnet sind, wobei die beiden Abstützteile, um die Spindel zu klemmen, derart beweglich sind, daß die Längsachsen der Spindelausnehmungen zueinander bzw. relativ zu der Längsachse der Spindel in eine nicht koaxiale Stellung gebracht werden können. Um, z.B. bei sehr steilem Bewegungsgewinde, ein Durchrutschen des Spindelgewindes in der Spindelausnehmung der Abstützung, d. h. ein Durchdrehen der Spindel, zu vermeiden, ist es vorteilhaft, wenn die Abstützung an einer dem Spindelgewinde zugewandten Seite, d. h. an einer Innenoberfläche der Spindelausnehmung, den Eingriff unterstützende Mittel, vorzugsweise eine schraubenförmige, insbesondere zu dem Spindelgewinde komplementäre Rippe, aufweist, die das Greifen der Abstützung auf der Spindel verbessern.

Eine besonders wirkungsvolle Klemmung kann in einfacher Weise dadurch erreicht werden, daß zumindest eines der beiden Abstützteile auf der Spindel verkantet werden kann. Hierzu können die beiden Abstützteile relativ zueinander um eine zur Längsrichtung der Spindel im Wesentlichen senkrechte Achse kippbar sein, wobei vorzugsweise zwischen den beiden Abstützteilen zwei gegenüberliegende Federelemente vorgesehen sind, die die beiden Abstützteile miteinander verbinden und in eine Stellung relativ zueinander vorspannen. Dies besitzt den Vorteil, daß durch die Doppelfunktion der Federelemente, nämlich Verbindung und Vorspannung, der Aufbau der Abstützung sehr einfach, kompakt und leicht ist. Darüber hinaus sind bei entsprechender Geometriefestlegung durch das Verkanten der Abstützteile auch mit relativ kleinen und leichten Federn hohe Klemmkräfte erzielbar, die einen zuverlässigen Antrieb der Abstützung sicherstellen.

Vorzugsweise besitzt zumindest eines der Federelemente einen bogenförmigen Abschnitt, dessen Krümmung die Länge des Federelementes und hierdurch die Stellung der beiden Abstützteile zueinander bestimmt. Gemäß einer bevorzugten Weiterbildung der Erfindung wirken die Lösemittel auf den bogenförmig gekrümmten Abschnitt des Federelementes ein, um die Stellung der beiden Abstützteile zueinander zu verändern. Vorzugsweise ist der gekrümmte Abschnitt des Federelementes derart angeordnet, daß sich dessen Sehne parallel zur Verschieberichtung der Abstützung, d.h. parallel zur Spindellängsrichtung erstreckt, wobei das Eingriffsteil der Lösemittel ein starrer Nocken sein kann, der mit dem bogenförmigen Abschnitt des Federelementes in Eingriff bringbar ist. Hierdurch kann die Klemmung der Abstützung sehr einfach und effektiv dadurch gelöst werden, daß die Abstützung mit dem bogenförmigen Abschnitt des Federelementes auf den Nocken fährt, wodurch die Krümmung des bogenförmigen Abschnitts und hierdurch die Stellung der beiden Abstützteile zueinander verändert wird. Diese Ausführung ist insbesondere hinsichtlich ihres sehr einfachen und zuverlässigen Aufbaus von Vorteil.

Eine vorteilhafte Ausführungsform besteht darin, daß der gekrümmte Abschnitt des Federelementes einer Innenwand des Gehäuseabschnitts zugewandt ist und das Eingriffsteil einen sich in Spindellängsrichtung erstrecken den, insbesondere keilförmigen Nockenabschnitt aufweist, wobei der Nockenabschnitt von der Innenwand des die Abstützung umgebenden Gehäuses vorspringen, oder auch eine Absenkung in dieser Innenwand bilden kann, wodurch der gekrümmte Abschnitt in eine weniger stark gekrümmte Form gedrückt wird oder in eine stärker gekrümmte Form ausballen kann.

Ebenso vorteilhaft kann der gekrümmte Abschnitt des Federelementes in einer Nut in einer Umfangsseite des Abstützelementes angeordnet sein und das Eingriffsteil einen sich in Spindellängsrichtung erstreckenden Schienabschnitt aufweisen, der in die Nut eingreift und Ausnehmungen aufweist, wobei der gekrümmte Abschnitt durch den Schienabschnitt in eine weniger stark gekrümmte Form gedrückt wird und in den Ausnehmungen in eine stärker gekrümmte Form springen kann.

Den genannten Ausführungsformen der Lösemittel und der Federeinrichtung liegt gemeinsam das Prinzip zugrunde, daß ortsfeste Eingriffsteile der Lösemittel durch Verschieben der Abstützung mit gekrümmten Abschnitten der Federelemente in Eingriff gebracht werden können und die Krümmung dieser bogenförmigen Abschnitte verändern, um die Klemmung der Spindel durch die Abstützung zu lösen.

Um auch mit geringen Spannkräften mittels günstiger Hebelverhältnisse relativ hohe Klemmkräfte auszuüben und die Abstützung wirkungsvoll mit dem Spindelgewinde zu verklemmen, kann zwischen den beiden Abstützteilen auch ein Exzentermechanismus vorgesehen sein, wodurch zumindest eines der Abstützteile durch Verdrehen desselben mit dem Spindelgewinde verklemmt. Vorzugsweise ist wenigsten eines der Abstützteile relativ zu dem anderen um eine zur Längsachse der Spindel parallele und exzentrische Achse verdrehbar, wobei eine Federeinrichtung zur Verdrehung und Vorspannung der beiden Abstützteile zueinander vorgesehen ist. Die exzentrische Verklemmung zeichnet sich unter anderem dadurch aus, daß zur Verdrehung des exzentrisch gelagerten Abstützteiles kleine Kräfte ausreichen, die durch die Verlagerung der Spindelausnehmung relativ zur Spindel aufgrund der exzentrischen Lagerung in relativ hohe Klemmkräfte umgesetzt werden, so daß die Abstützung mit dem Spindelgewinde wirkungsvoll verklemmt ist. Anstelle des Exzentermechanismusses zwischen den beiden Abstützteilen ist es ebenfalls möglich, die Abstützung, die in diesem Falle einteilig ausgeführt sein kann, als Ganzes im Gehäuse bezogen auf die Spindel exzentrisch zu lagern, so daß ein Verdrehen der Abstützung die Spindelausnehmung in der Abstützung relativ zur Spindel versetzt. Die zuvor beschriebene Ausführung des Exzentermechanismusses zwischen den beiden Abstützteilen besitzt jedoch Vorteile hinsichtlich eines einfachen Aufbaus des Gehäuses.

Um die Klemmung der exzentrischen Abstützteile und das Lösen der selben in Abhängigkeit der axialen Stellung der Abstützteile in konstruktiv sehr einfacher Weise zu steuern, ist vorzugsweise eine Drehführungseinrichtung zur Drehführung bzw. zur Festlegung der rotatorischen Stellung der Abstützteile vorgesehen. Vorzugsweise ist für jedes der Abstützteile eine separate Drehführung vorgesehen, die beispielsweise als Längsnut und Eingriffsteil zwischen dem Gehäuse und dem entsprechenden Abstützteil ausgebildet sein kann, wobei die Längsnut und/oder das Eingriffsteil eine Steuerkurve festlegen und die rotatorische Stellung der beiden Abstützteile zueinander in Abhängigkeit der axialen Stellung derselben steuern. Besonders einfach zu fertigen ist die Drehführungseinrichtung dadurch, daß eines der beiden Abstützteile durch eine sich gerade erstreckende Längsnut-Nuteingriffsteil-Verbindung, wobei die Längsnut und das komplementäre Eingriffsteil wahlweise an dem entsprechenden Abstützteil und dem Gehäuse ausgebildet sein können, drehfest geführt ist, während dem anderen Abstützteil eine Verdrehsteuervorrichtung zugeordnet ist, die vorzugsweise ein von einer Innenwand des Gehäuses vorspringendes keilförmig profiliertes Nockenteil und eine in einer Umfangsseite des Abstützteiles vorgesehene Längsnut umfaßt. In umgekehrter Weise kann jedoch auch das Abstützteil einen Eingriffsvorsprung, insbesondere einen von der Umfangsseite vorspringenden Stift haben, der mit dem Nockenteil in Eingriff bringbar ist oder alternativ mit einer in dem Gehäuse ausgebildeten Längssteuernut in Eingriff ist.

Die zuvor beschriebenen Ausführungsformen mit Exzentermechanismus beruhen darauf, daß die Abstützung oder Teile hiervon zur Klemmung des Spindelgewindes verdrehbar sind und ein Drehmechanismus zur Drehung der Abstützung bzw. der entsprechenden Teile hiervon in eine klemmfreie Stellung entsprechend der axialen Stellung der Abstützung vorgesehen ist.

Ein besonders einfacher Aufbau der Abstützung ist gemäß einer vorteilhaften Weiterbildung der Erfindung auch dadurch gegeben, daß die Abstützung zwei halbschalenförmige Abstützabschnitte besitzt, die zumindest auf einer Seite der Spindel voneinander getrennt sind und zwischen denen das Spindelgewinde eingespannt ist und die Lösemittel als Aufspreizeinrichtung zum Aufspreizen der Abstützabschnitte ausgebildet sind, wobei die Aufspreizeinrichtung vorzugsweise eine Längsnut zwischen den beiden Abstützabschnitten und ein Aufspreizteil, insbesondere einen mit der Längsnut in Eingriff bringbaren Spreiznocken aufweist. Diese halbschalenförmige Ausbildung der Abstützung zeichnet sich durch ihren sehr einfachen Aufbau und günstige Herstellbarkeit aus, wobei sich insbesondere auch für die Lösemittel konstruktiv sehr einfache Verhältnisse ergeben. Vorzugsweise ist die Abstützung einteilig als an einer Seite geschlitzter Ring ausgebildet, der aufgrund seiner Elastizität mit dem Spindelgewinde in Eingriff ist. Vorzugsweise besitzt die Abstützung an einer Innenseite ein zu dem Spindelgewinde komplementär ausgebildetes Gewinde, um den Eingriff zwischen der Abstützung und dem Spindelgewinde zu verbessern. Durch Aufspreizen der Abstützung werden die beiden Gewinde außer Eingriff gebracht.

Um die Spindelabstützung insbesondere für lange und relativ dünne Spindeln zu verbessern, sind vorzugsweise auf beiden Seiten der Spindel mehrere Abstützungen vorgesehen.

Ein weiterer Aspekt der Erfindung liegt darin, daß das die Spindel aufnehmende Gehäuse einen Längsschlitz aufweist, durch den sich ein mit der Spindelmutter verbundenes Verbindungselement erstreckt und ein elastisches Verschlußband zum Verschließen des Längsschlitzes vorgesehen ist, wobei das Gehäuse eine Aufnahmeausnehmung zur Aufnahme des Verschlußbandes aufweist, deren Öffnungsbereich zur Gehäuseaußenseite eine geringere Breite als das Verschlußband hat und Mittel zur Verringerung der wirksamen Bandbreite vorgesehen sind.

Um das Eindringen von Schmutz und Staub in das Innere des Spindelgehäuses zu verhindern, wodurch die Lagerung der Spindel und insbesondere die verstellbaren Abstützungen beeinträchtigt werden könnten, muß der Längsschlitz in dem Gehäuse für das Verbindungselement, mit dem ein jeweiliges Maschinenelement mit der Spindelmutter verbunden ist, verschlossen werden. In der Praxis war es bislang üblich, den Ldngsschlitz durch ein elastisches Verschlußband zu verschließen, das mittels seitlich angeformter Halteflansche in längsverlaufenden, rillenartigen Vertiefungen der beiden den Längsschlitz begrenzenden Gehäusewände lösbar verrastet wurde. Eine derartige Ausbildung des Verschlußbandes verteuerte jedoch zum einen die Herstellung des entsprechenden Bandes, zum anderen war die Haltbarkeit der angeformten Halteflansche unbefriedigend und darüber hinaus mußten die rillenartigen Vertiefungen in den Seitenwänden des Längsschlitzes sehr genau bearbeitet werden, um ein dichtes Verschließen zu erreichen.

Um einen verbesserten Verschlußmechanismus zu schaffen, der die Nachteile herkömmlicher Lösungen vermeidet und in einfacher Weise ein Verschließen des Gehäuses ermöglicht, zeichnet sich die Lineargetriebeeinheit nach einem weiteren Merkmal der Erfindung dadurch aus, daß das Verschlußband in einer Aufnahmeausnehmung aufgenommen ist, die einen Dichtabschnitt besitzt, der schmäler ist als die Breite des Verschlußbandes, wobei zum Einfädeln des Verschlußbandes in die Aufnahmeausnehmung eine Einrichtung zur Verringerung der wirksamen Bandbreite vorgesehen ist. Hierdurch kann ein einfaches und billiges Verschlußband mit im wesentlichen rechteckigen Querschnitt verwendet werden.

Die Aufnahmeausnehmung ist vorzugsweise im wesentlichen nutförmig ausgebildet und weist zwei Seitenwände und einen Boden auf, in den der zu verschließende Längsschlitz mündet. Um ein unbeabsichtigtes Herausrutschen des Verschlußbandes aus der Nut zu verhindern und die Abdichtung zu verbessern, kann gemäß einer vorteilhaften Ausführungsform der Erfindung in einem Öffnungsbereich der Nut auf einer oder auf beiden Seiten der Nut die entsprechende Seitenwand jeweils einen vorzugsweise rippenartigen Vorsprung aufweisen, wobei die Seitenwände in dem Bereich zwischen den Vorsprüngen und dem Boden einen Abstand haben können, der größer ist als die Breite des Verschlußbandes. Der Öffnungsbereich der Nut kann jedoch auch ohne Vorsprünge ausgebildet sein, wobei die Seitenwände voneinander einen Abstand haben sollten, der kleiner ist als die Breite des Verschlußbandes derart, daß das Verschlußband zwischen den beiden Seitenwänden elastisch geklemmt ist. Hierdurch wird ebenfalls ein unbeabsichtigtes Herausrutschen des Verschlußbandes aus der Nut verhindert und die Abdichtung zwischen Verschlußband und Gehäuse verbessert.

Um das Verschlußband einfach und ohne zu verhaken in die Aufnahmeausnehmung einzuführen, besitzen die Mittel zur Verringerung der wirksamen Bandbreite vorzugsweise eine Bandführungseinrichtung mit einem Wölbemechanismus zur Führung des Verschlußbandes in einem gewölbten Zustand beim Ein- bzw. Ausfädeln des Verschlußbandes. Hierdurch wird das Verschlußband in einem Querschnitt quer zur Längsrichtung des Bandes gekrümmt und die effektive Breite des Verschlußbandes verringert, so daß das Verschlußband einfach in die Aufnahmeausnehmung eingeführt werden kann, wobei das Verschlußband nach Passieren des Öffnungsbereiches durch elastische Rückformung sich wieder verbreitert und ggf. gegen die Seitenwände der Aufnahmenut verspannt.

Um die wirksame Breite des Verschlußbandes zum Einführen in die Aufnahmeausnehmung bzw. zum Herausführen aus dieser zu verringern, könnte auch ein Verdrehmechanismus zur Verdrehung des Verschlußbandes vorgesehen sein, wobei das Verschlußband im wesentlichen um seine Längsachse verdreht und hierdurch aus der Aufnahmeausnehmung ggf. an den rippenartigen Vorsprüngen vorbei herausgedreht wird bzw. in diese hineingedreht wird.

Das Verschließen des Längsschlitzes beruht also grundsätzlich darauf, daß ein elastisches Verschlußband in eine Aufnahmeausnehmung geführt wird, die zumindest in einem Öffnungsbereich schmäler ist als die Breite des Bandes, wobei die Breite des Bandes zum Einführen beispielsweise durch Wölben oder Verdrehen des Bandes reduziert wird.

Um das Verschlußband zuverlässig in die Aufnahmeausnehmung zu führen, besitzt die Bandführungseinrichtung vorzugsweise beidseitig des Öffnungsbereiches der Aufnahmeausnehmung jeweils zumindest ein Führungselement, insbesondere eine drehbare Führungswalze, wobei die Mittel zur Verringerung der Verschlußbandbreite, d.h. der Wölbemechanismus bzw. der Verdrehmechanismus zwischen den beiden Führungselementen angeordnet sein kann.

Der Wölbemechanismus kann vorzugsweise zwei auf gegenüberliegenden Seiten des Verschlußbandes angeordnete Druckelemente aufweisen, die auf das Verschlußband von einer Seite in einem Mittelbereich des Verschlußbandes und auf der gegenüberliegenden Seite in den Randbereichen auf das Verschlußband drücken, um dieses zu wölben. Um das Verschlußband sanft zu verformen, kann eines der beiden Druckelemente als Wölbungskeil ausgebildet sein, während das andere Druckelement vorzugsweise zwei U-förmig vorspringende Drucknasen aufweist, die sich parallel zu einer Längsrichtung des Wölbungskeiles erstrecken.

Um eine zweiachsige Krümmung bzw. Biegung des Verschlußbandes zu vermeiden, ist der Wölbungsmechanismus zweckmäßigerweise in Verschlußbandlängsrichtung von den Führungselementen beabstandet. Hierdurch wird gewährleistet, daß das Verschlußband an zwei voneinander beabstandeten Stellen um unterschiedliche Achsen gebogen wird und sich das Band zwischen den beiden Biegestellen gerade richten kann, so daß eine übermäßige Beanspruchung oder gar eine Beschädigung des Bandes vermieden wird.

Vorzugsweise ist der Abstand der im Öffnungsbereich der Aufnahmeausnehmung angeordneten rippenartigen Vorsprünge von dem Boden der Aufnahmeausnehmung größer als die Dicke des Verschlußbandes ist. Dies erleichtert das Ein- bzw. Ausführen des Verschlußbandes und besitzt den Vorteil, daß die oben erwähnte zweiachsige Biegung des Verschlußbandes im Bereich des Einfädelns besser vermieden werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Einige Ausführungsbeispiele der Erfindung werden nachfolgend unter Bezugnahme auf die Zeichnungen näher erläutert. In diesen zeigen:
- Fig. 1: eine Lineargetriebeeinheit nach einer ersten bevorzugten Ausführungsform der Erfindung in einer teilgeschnittenen Seitenansicht, die ein Gehäuse, eine darin aufgenommene Spindel mit einer zugehörigen Spindelmutter und mehreren Abstützungen zeigt,
- Fig. 2: die Lineargetriebeeinheit gemäß Fig. 1 in einer Frontansicht im Schnitt,
- Fig. 3: eine Abstützung für die Spindel gemäß der Ausführungsform nach Fig. 1 in einem Längsschnitt, der die Spindel in einer Seitenansicht zeigt,
- Fig. 4: die Abstützungen nach Figur 3 in einer Frontansicht, wobei das Gehäuse im Ausschnitt und die Spindel geschnitten dargestellt sind,
- Fig. 5: eine Abstützung für die Spindel gemäß einer zweiten bevorzugten Ausführungsform der Erfindung in einem Längsschnitt, wobei die Spindel in einer Seitenansicht gezeigt ist,
- Fig. 6: eine vergrößerte Ansicht der Abstützung in einer Teilschnittdarstellung entlang der Linie A-B in Fig. 5,
- Fig. 7: die Abstützung gemäß den Fig. 5 und 6 in einer Frontansicht, wobei die Spindel und das Gehäuse im Ausschnitt jeweils geschnitten dargestellt sind,
- Fig. 8: eine Abstützung für die Spindel gemäß einer weiteren Ausführungsform der Erfindung in einer Seitenansicht ähnlich Fig. 3 und Fig. 5,
- Fig. 9: die Abstützung gemäß Fig. 8 in einer Frontansicht ähnlich den Fig. 4 und 7,
- Fig. 10: die Abstützung gemäß den Fig. 8 und 9 in einer Draufsicht in Teilschnittdarstellung,
- Fig. 11: eine Abstützung gemäß einer weiteren bevorzugten Ausführungsform der Erfindung in einer Seitenansicht ähnlich Fig. 3, 5 und 8,
- Fig. 12: die Abstützung gemäß Fig. 11 in einer Frontansicht ähnlich den Fig. 4, 7 und 9
- Fig. 13: eine Abstützung gemäß einer weiteren bevorzugten Ausführungsform der Erfindung in einer Seitenansicht ähnlich den Fig. 3, 5, 8 und 11,
- Fig. 14: die Abstützung gemäß Fig. 13 in einer Frontansicht ähnlich den Fig. 4, 7, 9 und 12
- Fig. 15: ein das Gehäuse verschließendes Verschlußband und eine zugeordnete Bandführungseinrichtung mit einem Wölbemechanismus entsprechend einer bevorzugten Ausführungsform der Erfindung in einer Seitenansicht,
- Fig. 16: eine schematische Darstellung des Verschlußbandes und der zugeordneten Bandführungseinrichtung mit dem Wölbemechanismus gemäß der Ausführungsform nach Fig. 15 in einer perspektivischen Ansicht,
- Fig. 17: einen Wölbemechanismus für das Verschlußband in einer geschnittenen Frontansicht senkrecht zur Längsachse des Verschlußbandes,
- Fig. 18: einen Wölbemechanismus für das Verschlußband in einer geschnittenen Frontansicht ähnlich Fig. 17 nach einer weiteren Ausführungsform mit einem Wölbedorn und einer Gegenrolle,
- Fig. 19: eine Seitenansicht des Wölbemechanismus nach Fig. 18,
- Fig. 20: eine Teilansicht des Gehäuses mit einer Aufnahmeausnehmung und dem darin aufgenommenen Verschlußband in einer perspektivischen Darstellung, und
- Fig. 21: eine Frontansicht des Gehäuseausschnittes nach Figur 18 mit einer in die Aufnahmeausnehmung eingreifenden Führungswalze,
- Fig. 22: eine Aufnahmeausnehmung mit einem darin eingeklemmten Verschlußband in einem Querschnitt,
- Fig. 23: eine Aufnahmeausnehmung mit einem darin aufgenommenen Verschlußband in einer Ausführung mit rippenartigen Vorsprüngen in einem Öffnungsbereich in einer Querschnittsdarstellung ähnlich Figur 22 und
- Fig. 24: eine Aufnahmeausnehmung mit einem darin aufgenommenen Verschlußband in einer Querschnittsdarstellung ähnlich Fig. 22 und 23 in einer Ausführungsform mit schwalbenschwanzförmigem Querschnitt der Ausnehmung.

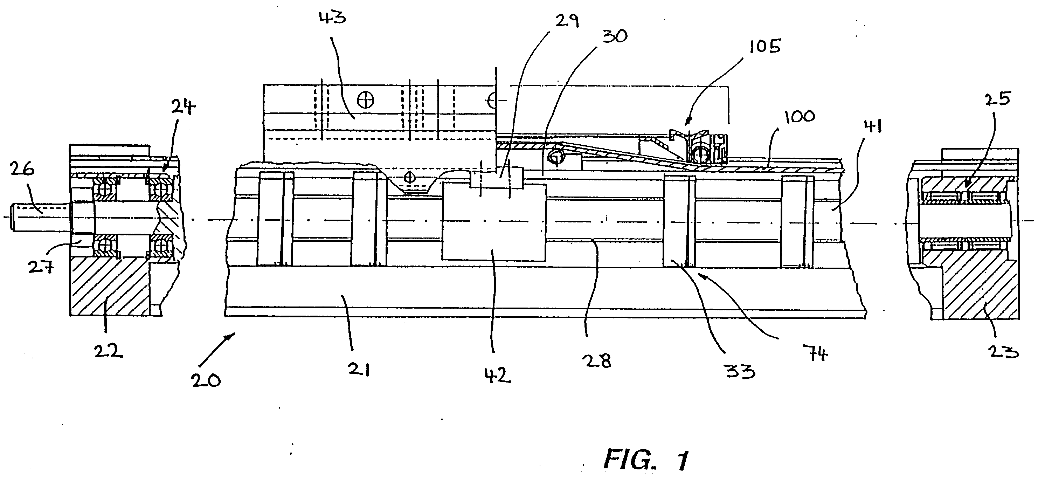

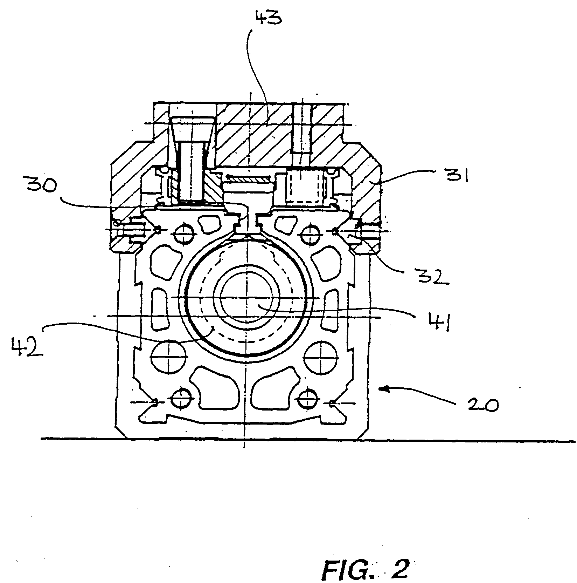

Fig. 1 zeigt eine Lineargetriebeeinheit, die als Grundbausteine einen Rahmen 20, eine Spindel 41 und eine Spindelmutter 42 aufweist, die ein schlittenartiges Verschiebestück 43 antreibt. Der Rahmen 20 bildet ein formstabiles längliches Gehäuse, das einen rohrförmigen Gehäuseabschnitt 21 und zwei Lagerungsendabschnitte 22 und 23 besitzt, die, wie in Fig. 1 zu sehen ist, an den Enden des Gehäuseabschnittes 21 mit diesem fest verbunden sind. Der Gehäuseabschnitt 21 ist als Leichtmetallstrangußprofil ausgebildet und besitzt eine Querschnittsform, die in Fig. 2 gezeigt ist.

Die Spindel 41 ist in dem Gehäuse aufgenommen und drehbar gelagert. Hierzu sind in den Lagerungsendabschnitten 22,23 Wälzlager 24 und 25 vorgesehen, die jedoch auch durch entsprechende Gleitlager ersetzt sein können. Die Spindel 41 tritt an einem Ende des Gehäuses aus diesem heraus und besitzt an diesem Ende einen Antriebsabschnitt 26, an den eine nicht weiter dargestellte Antriebsvorrichtung wie z.B. ein Handrad oder ein Elektromotor angeschlossen werden kann. Eine Dichtung 27 verhindert an dem an den Antriebsabschnitt 26 angrenzenden Ende des Gehäuses den Eintritt von Staub, Schmutz oder dergleichen in das Innere des Gehäuses.

Die Spindelmutter 42, die auf der Spindel 41 sitzt, ist mit einem Spindelgewinde 28 in Eingriff und an dem Rahmen 20 längs verschieblich und drehfest geführt. Wie in Fig. 1 zu sehen ist, ist die Spindelmutter 42 mittels eines Verbindungselementes 29, daß mit der Spindelmutter 42 fest verbunden, insbesondere verschraubt ist, mit dem schlittenartigen Verschiebestück 43 verbunden, wobei das Verbindungselement 29 sich durch einen im Gehäuse ausgebildeten Längsschlitz 30 erstreckt und gleichzeit die Spindelmutter 42 längs verschieblich und drehfest führt.

Wie in Fig. 2 zu sehen ist, umgreift das schlittenförmige Verschiebestück 43 mit zwei Lagerungsabschnitten 31 den gehäuseartigen Rahmen 20 und ist durch Gleitstücke 32, die an den Lagerungsabschnitten 31 befestigt sind, in komplementären Lagerungsbahnen verschieblich geführt.

Das schlittenartige Verschiebestück 43, an dem linear anzutreibende und zu positionierende Maschinenelemente befestigt sein können, wird von der Spindelmutter 42 angetrieben, die die rotatorische Antriebsbewegung der Spindel 41 in eine translatorische Bewegung umsetzt.

Um Durchbiegungen, Orbitalbewegungen oder bei hohen Drehzahlen Schwingungen der Spindel 41 zu vermeiden, sind zwischen den Lagerungsendabschnitten 22, 23 auf beiden Seiten der Spindelmutter 42 eine Mehrzahl von Abstützungen 33 in dem Gehäuseabschnitt 21 aufgenommen, die die Spindel 41 an mehreren Stellen zwischen den Lagerungsendabschnitten 22 und 23 gegenüber dem Gehäuseabschnitt 21 radial abstützen. Um einerseits die Spindel 41 auch in einem Mittelbereich abzustützen und andererseits den Verstellbereich der Spindelmutter 42 nicht zu beschränken, können die Abstützungen 33 auf der Spindel 41 wandern. Der Antrieb der Abstützungen 33 erfolgt dabei direkt durch die Spindel 41.

Wie in den Fig, 3 und 4 gezeigt, ist hierzu jede Abstützung 33 relativ zu dem Gehäuseabschnitt 21 längsverschieblich und drehfest geführt und mit dem Spindelgewinde 28 in Eingriff bringbar, so daß die Abstützung 33 durch Drehen der Spindel 41 wie eine Mutter verschraubt wird und auf der Spindel 41 wandert. Um die Abstützung 33 an einer gewünschten Stelle anzuhalten und von dem mutterartigen Antrieb durch die Spindel 41 abzukoppeln, sind Mittel 74 zum Lösen des Eingriffs zwischen der Abstützung 33 und der Spindel 41 vorgesehen, wie nachfolgend näher erläutert wird.

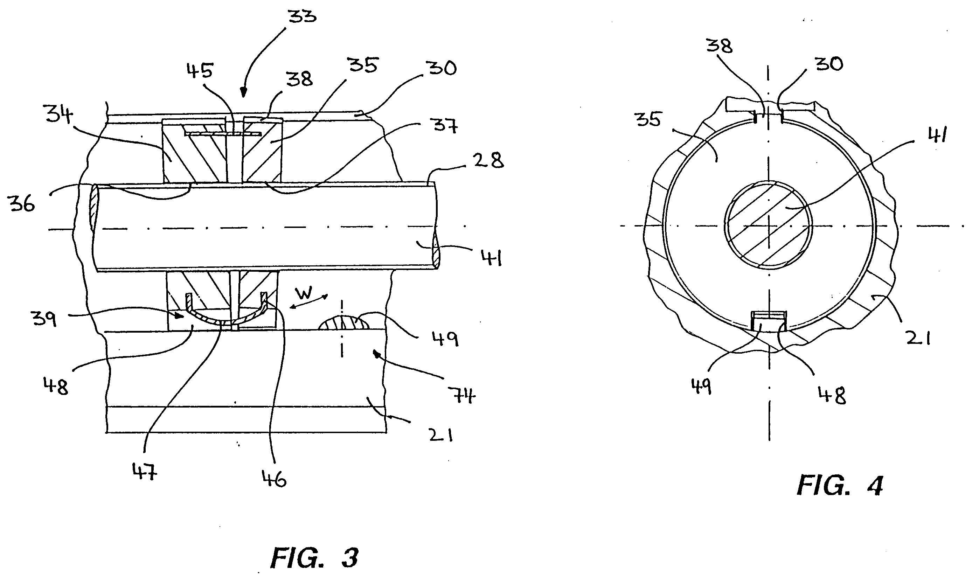

Die Abstützung 33 weist, wie in Figur 3 gezeigt ist, zwei zylindrische Abstützteile 34 und 35 auf, die jeweils eine Spindelausnehmung 36 bzw. 37 besitzen und auf der Spindel 41 sitzen.

Die beiden Abstützteile 34 und 35 sind in einer im wesentlichen zylindrischen Ausnehmung in dem Gehäuseabschnitt 21 aufgenommen und stützen sich an einer Innenwand derselben radial ab. Wie in Fig. 4 zu sehen ist, ist an einem Außenumfang der Abstützteile 34 und 35 jeweils ein Führungsvorsprung 38 ausgebildet, der sich in Spindellängsrichtung erstreckt und in dem Längsschlitz 30 des Gehäuseabschnittes 21 eingreift, um ein Verdrehen des entsprechenden Abstützteiles 34 bzw. 35 zu verhindern. Wie in Fig. 3 zu sehen ist, sind die beiden Abstützteile 34 und 35 durch eine Federeinrichtung 39 miteinander verbunden und derart relativ zueinander vorgespannt, daß die Spindel 41 in den beiden Spindelausnehmungen 36 und 37 geklemmt ist und die beiden Abstützteile 34 und 35 mit dem Spindelgewinde 28 in Eingriff sind. Die Federeinrichtung 39 weist zwei diametral gegenüberliegend angeordnete Blattfederelemente 45 und 46 auf, die in die beiden Abstützteile 34 und 35, die vorzugsweise aus Kunststoff sind, eingegossen bzw. eingesteckt oder eingeschraubt sind. Die Federelemente können jedoch auch in anderer Weise mit den beiden Abstützteilen 34 und 35 verbunden sein.

Während das in Fig. 3 obere Federelement 45 im wesentlichen gerade ist, besitzt das zweite Federelement 46 einen bogenförmig gekrümmten Abschnitt 47 der die beiden Enden des Federelementes 46, mit denen dieses in den Abstützteilen 34 und 35 verankert ist, verbindet. Wie in Fig. 3 gezeigt ist, erstreckt sich der bogenförmige Abschnitt 47 in einer Längsnut 48, die in der Umfangsseite beider Abstützteile 34 und 35 ausgebildet ist, wobei der bogenförmige Abschnitt 47 der Innenwand des Gehäuseabschnittes 21 zugewandt ist und sich eine Sehne des bogenförmigen Abschnittes 47 im wesentlichen parallel zur Längsrichtung der Spindel 41 erstreckt. Die nachgiebige Verbindung der beiden Abstützteile 34 und 35 erlaubt es, daß die beiden Abstützteile relativ zueinander beweglich sind und um eine Achse, die sich im wesentlichen senkrecht zur Längsrichtung der Spindel 41 (in Fig. 3 senkrecht zur Zeichenebene) erstreckt, kippbar sind. Die beiden Federelemente 45 und 47 spannen hierbei die beiden Abstützteile 34 und 35 derart vor, daß diese zueinander verkantet sind, d.h. daß die Achsen der Spindelausnehmungen 36 und 37 nicht koaxial und nicht parallel miteinander sind, so daß die Spindel 41 geklemmt wird und die Spindelausnehmungen 36 und 37 das Spindelgewinde 28 greifen.

Wie in Fig. 3 gezeigt ist, sind die Oberflächen der Spindelausnehmungen 36 und 37 eben, d.h. es ist kein Gewinde in die Spindelausnehmungen geschnitten, und sitzen auf Außenseiten der Gewindeflanken des Spindelgewindes 28. Der mutterartige Antrieb der Abstützteile 34 und 35 wird durch Reibschluß zwischen den Außenseiten der Gewindeflanken des Spindelgewindes 28 und den Spindelausnehmungen 36 und 37 erzielt. Hierbei erweist es sich günstig, daß durch das Verkanten der beiden Abstützteile 34 und 35 aufgrund günstiger Hebelverhältnisse auch mit kleinen Vorspannkräften relativ hohe Klemmkräfte ausgeübt werden, um den Antrieb der Abstützteile zu gewährleisten. Um ein Durchrutschen des Spindelgewindes 28 zu verhindern, können, ohne daß dies in Fig. 3 explizit dargestellt wäre, an der Oberfläche der Spindelausnehmungen 36 und 37 Mittel zur Verbesserung des Eingriffs zwischen den Spindelausnehmungen 36 und 37 und dem Spindelgewinde 28 vorgesehen sein. Vorzugsweise können Vorsprünge, beispielsweise eine oder mehrere schraubenförmige, insbesondere zu dem Spindelgewinde 28 komplementäre Rippen in einer der oder in beiden Spindelausnehmungen 36 und 37 ausgebildet sein, die zwischen die Gewindeflanken des Spindelgewindes 28 eingreifen, so daß die Antriebskraft der Spindel 41 nicht nur reibschlüssig, sondern auch formschlüssig auf die Abstützteile 34 und 35 übertragen wird. Dies erweist sich insbesondere bei Spindeln mit großen Gewindesteigungen von Vorteil.

Um die Abstützung 33 an einer gewünschten Stelle anzuhalten und von dem Antrieb durch die Spindel 41 abzukoppeln, weisen die Lösemittel 74 zum Lösen des Eingriffs zwischen den Abstützteilen 34 und 35 und der Spindel 41 ein Eingriffsteil 49 auf, das in Abhängigkeit der axialen Stellung der beiden Abstützteile 34 und 35 auf der Spindel 41 mit der Federeinrichtung 39 in Eingriff gelangt. Das Eingriffsteil 49 ist als Nockenteil mit einem im wesentlichen keilförmigen Nockenabschnitt ausgebildet und an der Innenwand des Gehäuseabschnittes 21 befestigt. Das Eingriffsteil 49 ist dabei auf dem Verschiebeweg angeordnet, den das zweite Federelement 46 überstreicht, wenn dieses auf der Spindel 41 wandert. Wie in Fig. 3 zu sehen ist, läuft der bogenförmige Abschnitt 47 des Federelementes 46 bei entsprechender Verschiebung der Abstützung 33 auf das Eingriffsteil 49 wobei der keilförmige Nockenabschnitt desselben den bogenförmigen Abschnitt 47 zu dessen Krümmungsmittelpunkt hin (in Fig. 3 nach oben) drückt, so daß sich die Krümmung des bogenförmigen Abschnittes 47 verkleinert und die Sehne desselben sich verlängert. Hierdurch wird der Abstand zwischen den beiden Befestigungspunkten des Federelementes 46 an den beiden Abstützteilen 34 und 35 größer und das Abstützteil 35 wird relativ zu dem anderen Abstützteil 34 in Richtung des Pfeiles W geschwenkt, so daß die Verkantung der beiden Abstützteile 34 und 35 beseitigt und die Klemmung der Spindel 41 gelöst wird. Dementsprechend bleibt die Abstützung 33 an der Stelle des Eingriffteiles 49 stehen und die Spindel 41 dreht sich ohne die Abstützung 33 anzutreiben.

Die Abstützung 33 wird mit der Spindel 41 wieder in Eingriff gebracht, entweder durch eine in Antriebsrichtung gesehen von hinten auflaufende weitere Abstützung oder durch ein Auflaufen der Spindelmutter 42, so daß die entsprechende Abstützung über das Eingriffsteil 49 hinweggeschoben wird und wieder mit der Spindel 41 verklemmt.

Das Prinzip der Klemmung und der entsprechenden Mittel, diese zu lösen, kann selbstverständlich umgekehrt werden, indem die beiden Abstützteile dann verkantet sind, wenn der bogenförmige Abschnitt 47 des Federelementes 46 in eine gerade Stellung gezwungen wird und der Eingriff zwischen der Abstützung 33 und der Spindel 41 gelöst ist, wenn der Abschnitt 47 zu seiner entspannten Stellung hin ausballt. Dementsprechend wäre das Eingriffsteil 49 eine in dem Verschiebeweg, den der bogenförmige Abschnitt 47 überstreicht, ausgebildete Senke.

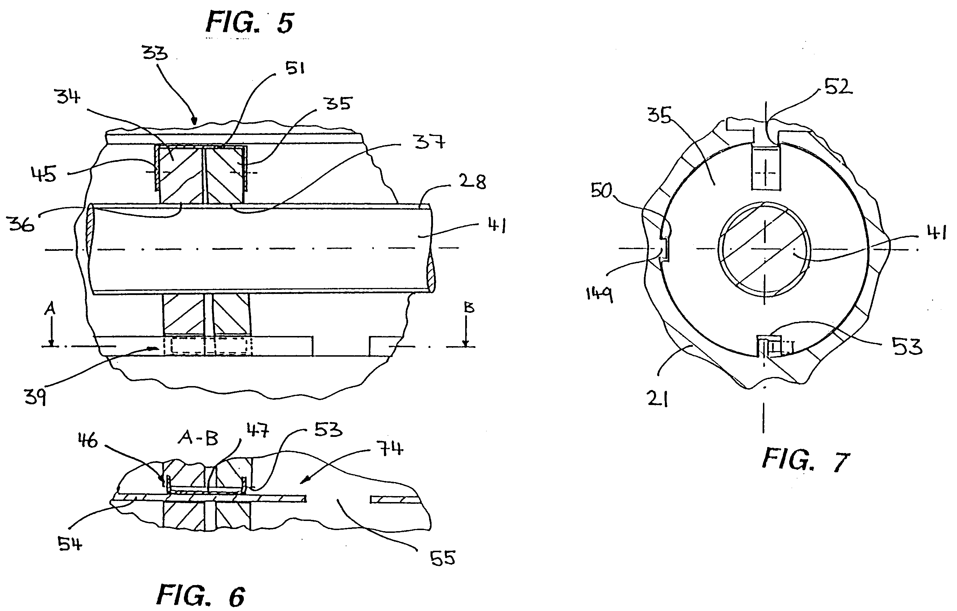

Die Fig. 5 bis 7 zeigen eine weitere Ausführungsform der Abstützung, die im wesentlichen der zuvor beschriebenen Ausführungsform entsprechend Fig. 3 und 4 ähnlich ist. Die Abstützung 33 besitzt ebenfalls zwei Abstützteile 34 und 35, die, wie in Fig. 7 zu sehen ist, jeweils durch einen von der Innenwand des Gehäuseabschnittes 21 vorspringenden Führungsvorsprung 149 und eine entsprechende Führungsnut 50 in der Umfangsseite der Abstützteile längsverschieblich und drehfest geführt sind. Die beiden Abstützteile 34 und 35 sind ähnlich wie in Fig. 3 und 4 um eine zur Längsrichtung der Spindel 41 senkrechte Achse kippbar und klemmen auf diese Weise das Spindelgewinde 28. Die entsprechende Federeinrichtung 39 weist zwei Federelemente 45 und 46 auf, die die beiden Abstützteile 34 und 35 relativ zueinander vorspannen. Das Federelement 45 umgreift die beiden Abstützteile 34 und 35 spangenförmig, wobei ein Verbindungsabschnitt 51 des Federelementes 45 in einer nutförmigen Ausnehmung 52 in den Umfangsflächen der beiden Abstützteile 34 und 35 aufgenommen ist.

Das zweite Federelement 46 besitzt ähnlich der Ausführung nach Fig. 3 einen bogenförmig gekrümmten Abschnitt, der die beiden Endabschnitte des Federelementes 46, mit denen dieses mit den beiden Abstützteilen 34 und 35 verbunden ist, verbindet. Wie in den Fig. 5 bis 7 zu sehen ist, ist die Anordnung des Federelementes 46 gegenüber der Anordnung nach Fig. 3 und 4 verdreht, wobei der bogenförmige Federabschnitt 47 in einer Federnut 53 angeordnet ist, die parallel zur Spindellängsrichtung in einer Umfangsseite der beiden Abstützteile 34 und 35 ausgebildet ist. In dieser Nut aufgenommen ist ebenfalls ein Eingriffsteil 54, das schienenförmig in Spindellängsrichtung von der Innenwand des Gehäuseabschnittes 21 vorspringt. Wie in Fig. 6 zu sehen ist, drückt das schienenförmige Eingriffsteil 54 den bogenförmigen Abschnitt 47 des Federelementes 46 in eine gestreckte Form. Das schienenförmige Eingriffsteil 54 besitzt eine Löseausnehmung 55, in die der im entspannten Zustand bogenförmige Abschnitt 47 des Federelementes 46, wenn die Abstützung 33 in der entsprechenden axialen Stellung ist, vorspringen kann, so daß sich die wirksame Länge des Federelementes 46 ändert und die Klemmung der Spindel 41 in den Spindelausnehmungen 36 und 37 der beiden Abstützteile 34 und 35 gelöst wird. Das Prinzip der Klemmung dieser Ausführungsform entspricht ansonsten der zuvor beschriebenen gemäß den Figuren 3 und 4, so daß eine genaue Erläuterung nicht noch einmal notwendig erscheint.

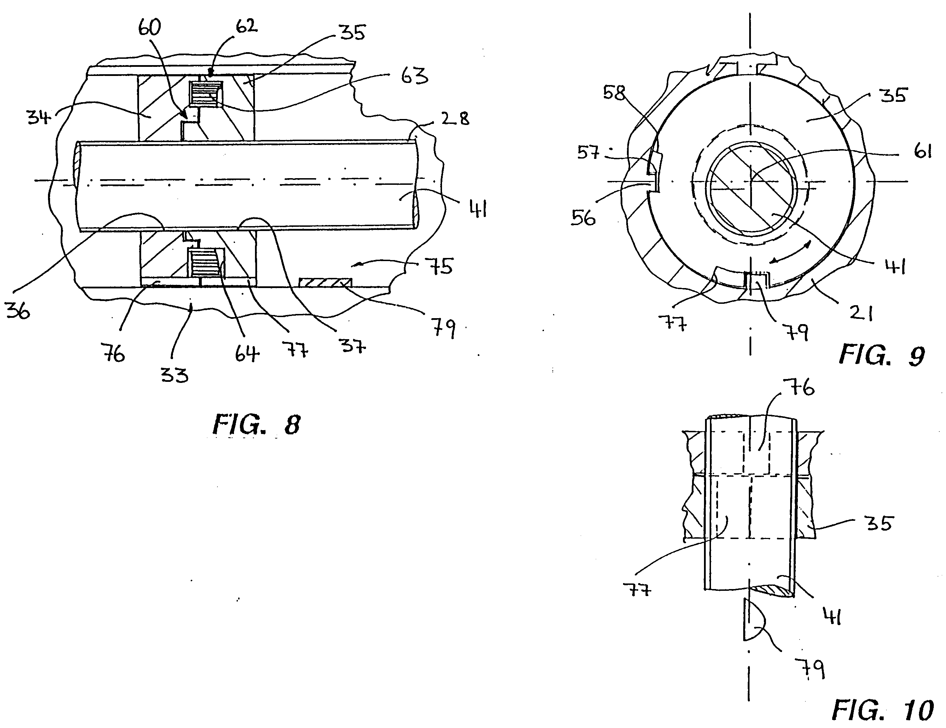

Die Fig. 8 bis 10 zeigen eine weitere Ausführungsform einer Abstützung 33, die durch Klemmung der Außenseiten der Gewindeflanken des Spindelgewindes 28 mutterartig angetrieben und verstellt wird.

Wie in den Fig. 8 und 9 gezeigt ist, weist die Abstützung 33 zwei Abstützteile 34 und 35 auf, die relativ zueinander verdrehbar sind. Beide Abstützteile 34 und 35 besitzen eine Spindelausnehmung 36 bzw. 37 und sitzen auf der Spindel 41. Eines der beiden Abstützteile 34 ist mittels einer Längsnut 56 und einem Führungsvorsprung 57 an der Innenwand des Gehäuseabschnittes 21 drehfest geführt, während das andere Abstützteil 35 eine Längsnut 58 besitzt, die eine größere Breite als der Führungsvorsprung 57 hat und eine begrenzte Verdrehung des Abstützteiles 35 erlaubt. Zwischen den beiden Abstützteilen 34 und 35 ist eine nabenartige Verbindung 60 vorgesehen, durch die die beiden Abstützteile beim Verdrehen relativ zueinander um eine feste Drehachse 61 geführt sind. Die Drehachse 61 ist parallel, jedoch exzentrisch zur Längsachse der Spindelausnehmungen 36 und 37 (und hierdurch exzentrisch zur Längsachse der Spindel 41), so daß ein Verdrehen der beiden Abstützteile 34 und 35 ein Klemmen der Spindel 41 in den beiden Spindelausnehmungen 36 und 37 bewirkt. Die Drehachse 61 liegt vorzugsweise koaxial mit der Achse der zylindrischen Ausnehmung des Gehäuseabschnittes 21, um ein Klemmen des Abstützteiles 35 beim Verdrehen zu verhindern. Soll die Spindel 41 zentrisch in der Gehäuseausnehmung des Gehäuseabschnittes 21 angeordnet sein (in diesem Falle wäre die Drehachse 61 nicht koaxial mit der Gehäuseachse), so wäre der Außendurchmesser des Abstützteiles 35 entsprechend zu reduzieren, um ein Klemmen mit dem Gehäuseabschnitt 21 zu verhindern, bzw. müßte der Außenumfang des Abstützteiles 35 derart gestaltet sein, daß dieser im Spindelklemmzustand nicht mit der Innenwand des Gehäuseabschnittes 21 klemmt.

Die beiden Abstützteile 34 und 35 sind durch eine Federeinrichtung 62 relativ zueinander vorgespannt, um die Spindel 41 zu klemmen. Hierzu ist zwischen den beiden Abstützteilen 34 und 35 eine Drehfeder 63 angeordnet, die in einer Federausnehmung 64, die durch die Abstützteile 34 und 35 begrenzt wird, aufgenommen ist und das Abstützteil 35 relativ zu dem drehfest geführten Abstützteil 34 verdreht, derart, daß das Spindelgewinde 28 in der Spindelausnehmung 37 geklemmt ist. Hierdurch wird die Abstützung 33, wenn die Spindel 41 gedreht wird, mutterartig angetrieben und verstellt, ähnlich wie bei den bereits beschriebenen Ausführungen nach den Fig. 3 bis 7.

Um die Antriebsklemmung zwischen Spindel 41 und Abstützung 33 zu lösen, ist eine Drehsteuereinrichtung vorgesehen, die die rotatorische Stellung der beiden Abstützteile 34 und 35 relativ zueinander in Abhängigkeit der axialen Stellung der selben steuert. Die Drehsteuereinrichtung 75 weist, wie in den Fig. 8 und 10 zu sehen ist, ein von der Innenwand des Gehäuseabschnittes 21 vorspringendes Eingriffsteil auf, das mit dem Gehäuseabschnitt 21 integral einstückig ausgebildet oder mit diesem lösbar verbunden sein kann und als im wesentlichen keilförmig profiliertes Nockenteil 79 ausgebildet ist, wie insbesondere in Fig. 10 zu sehen ist. Das relativ zu dem drehfesten Abstützteil 34 verdrehbare Abstützteil 35 besitzt an seinem Außenumfang eine Drehsteuernut 77, die mit dem keilförmig profilierten Nockenteil 79 in Eingriff gelangt, wenn die Abstützung 33 auf das Nockenteil 79 läuft. Hierbei verdreht das Nockenteil 79 das Abstützteil 35, wodurch sich aufgrund der Exzentrizität die Klemmung der Spindel 41 in der Spindelausnehmung 37 löst. Ähnlich der Drehsteuernut 77 besitzt das drehfeste Abstützteil 34 an seinem Außenumfang eine Durchgangsnut 76, die in Umfangsrichtung fluchtend mit dem Nockenteil 79 angeordnet ist, so daß die Abstützung 33 über das Nockenteil 79 hinweggeschoben werden kann. Während wie in Fig. 10 gezeigt ist, die Drehsteuernut 77 und die Durchgangsnut 76 im Spindelklemmzustand in Umfangsrichtung zueinander versetzt sind, wird das Abstützteil 35, wenn dieses auf das Nockenteil 79 geschoben wird, derart verdreht, daß die Durchgangsnut 76 und die Drehsteuernut 77 miteinander fluchten. Aus den Abstützstellungen, die durch die entsprechenden Nockenteile definiert sind, werden die Abstützungen jeweils, ähnlich den zuvor beschriebenen Ausführungen, entweder durch eine nachfolgende Abstützung oder die Spindelmutter geschoben.

Die exzentrische Klemmung der Spindel 41 erlaubt aufgrund der günstigen Umsetzung der Federvorspannkraft durch die exzentrische Nabenverbindung die Spindel 41 mit hohen Klemmkräften zu klemmen.

Es ist anzumerken, daß das Prinzip der Drehsteuereinrichtung auch umgekehrt werden könnte, ohne daß dies explizit in den Zeichnungen dargestellt ist. In diesem Falle besäße das Abstützteil 35 einen Eingriffsvorsprung, beispielsweise einen von dem Außenumfang vorspringenden Stift, der in eine Drehsteuernut in der Innenwand des Gehäuseabschnittes 21 eingreifen würde. An den Stellen, an denen die Abstützung 33 von dem Spindeltrieb 41 abzukoppeln wäre, müßte die Drehsteuernut eine entsprechende Kurve definieren, um das Abstützteil 35 zu verdrehen.

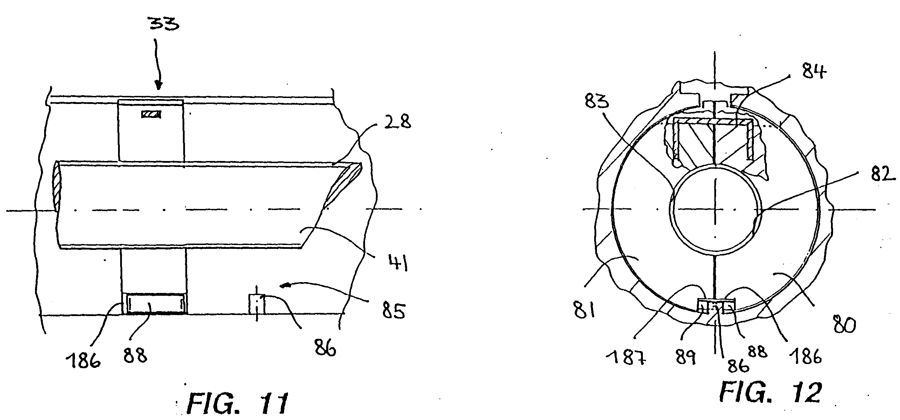

Die Fig. 11 und 12 zeigen eine weitere Ausführung, bei der eine Abstützung 33 durch Klemmen des Spindelgewindes 28 angetrieben wird. Die Abstützung 33 weist zwei Abstützabschnitte 80 und 81 auf, die jeweils halbringförmig sind und die Spindel 41 halbschalenartig umgreifen. Zusammengesetzt, wie in Fig. 12 zu sehen ist, ergänzen sich die beiden Abstützteile 80 und 81 zu einer im wesentlichen ringförmigen Abstützung, die in einer zylindrischen Ausnehmung des Gehäuseabschnittes 21 aufgenommen und drehfest geführt ist. Die beiden Abstützteile 80 und 81 besitzen eine jeweils halbzylindrische Spindelausnehmung 82 bzw. 83, die zusammen eine Spindelausnehmung begrenzen, in der die Spindel 41 aufgenommen ist und klemmbar ist. Um die beiden Abstützteile 80 und 81 vorzuspannen, um die Spindel 41 zu klemmen, d.h. die beiden halbzylindrischen Spindelausnehmungen 82 und 83 gegen die Außenseite der Gewindeflanken des Spindelgewindes 28 zu drücken, ist eine Spannfeder 84 vorgesehen, die klammerförmig ausgebildet und in entsprechenden Ausnehmungen in beiden Abstützteilen 80 und 81 aufgenommen ist, wie in Fig. 12 zu sehen ist.

Anstelle der Spannfeder 84 könnte die Abstützung 33 auch einteilig ausgeführt sein, wobei diese lediglich an einer Seite geschlitzt wäre und die Spannkraft, um die Spindel zu klemmen, durch elastische Verformung der Abstützung aufgebracht werden könnte.

Im Spindelklemmzustand wird die Abstützung 33 ähnlich den zuvor beschriebenen Ausführungen durch Eingriff mit dem Spindelgewinde 28 angetrieben. Die Innenseite der Spindelausnehmungen 82 und 83 kann ggf. auch rippenartige Gewindevorsprünge aufweisen, um den Eingriff zwischen den beiden Abstützteilen 80 und 81 mit der Spindel 41 zu verbessern.

Um die Klemmung des Spindelgewindes 28 zu lösen und die Abstützung 33 von dem Antrieb durch die Spindel 41 abzukoppeln, ist eine Aufspreizeinrichtung 85 vorgesehen, die die Spindelausnehmungen 82 und 83 aufspreizt, wobei die beiden Abstützteile 80 und 81 um eine Achse, die im wesentlichen durch das Federelement 84 bestimmt ist, aufgeschwenkt werden. Die Aufspreizeinrichtung 85 weist ein fest mit dem Gehäuseabschnitt 21 verbundenes Aufspreizteil 86 auf, das als im wesentlichen doppelkeilförmiges oder elliptisches Nockenteil ausgebildet ist. Die beiden Abstützteile 80 und 81 besitzen, wie in Figur 12 zu sehen ist, an ihrem Außenumfang jeweils eine Ausnehmung 186 und 187, die zusammen eine Längsnut bilden, in die der Spreiznocken 86 eingreifen kann, wenn die Abstützung 33 über den Spreiznocken 86 geschoben wird. Wie in Figur 11 zu sehen ist, ist in den Ausnehmungen 186 und 187 jeweils ein bogenförmig gekrümmtes Blattfederelement angeordnet, wobei die bogenförmigen Abschnitte der Federelemente 88, 89 einander zugewandt sind, so daß der Spreiznocken 86 zwischen diese Federelemente 88, 89 eingreift und die Abstützteile 80 und 81 auseinanderdrückt, wenn diese über den Spreiznocken 86 wandern. Hierdurch wird der Eingriff zwischen der Abstützung 33 und der Spindel 41 gelöst, so daß die Abstützung angehalten wird und die Spindel sich drehen kann ohne die Abstützung 33 anzutreiben.

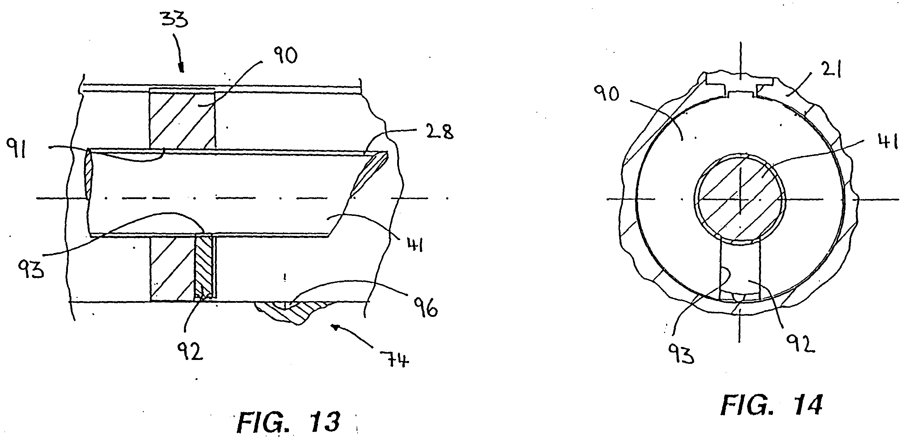

Die Fig. 13 und 14 zeigen eine Ausführung einer Abstützung 33, die durch das Spindelgewinde 28 nicht reibschlüssig, sondern formschlüssig angetrieben wird. Die Abstützung 33 besitzt ein im wesentlichen ringförmiges Abstützteil 90, das eine Spindelausnehmung 91 besitzt, in der die Spindel 41 verschieblich aufgenommen ist. Die Abstützung 33 besitzt ferner ein schieberartiges Eingriffsteil 92, das in einer radial verlaufenden Ausnehmung 93 in dem Abstützteil 90 radial verschieblich geführt ist. Das Eingriffsteil 92 weist einen konkaven, zu der Spindel 41 komplementären Eingriffsabschnitt 93 auf, der mit dem Spindelgewinde 28 in Eingriff bringbar ist. Hierzu ist vorzugsweise in den Eingriffsabschnitt 93 ein zu dem Spindelgewinde 28 komplementäres Gewinde eingebracht, durch das das Eingriffsteil 92, wenn es gegen die Spindel 41 geschoben wird, mit dieser in Eingriff ist. Wie in Fig. 13 zu sehen ist, steht das Eingriffsteil 92 im Eingriffszustand an der Innenwand des Gehäuseabschnittes 21 an. Die Lösemittel zum Lösen des Eingriffes zwischen der Abstützung 33 und der Spindel 41 weisen wie in Fig. 13 gezeigt ist, eine Lösesenke 96 auf, in die das Eingriffsteil 92 verschiebbar ist, so daß der Eingriffsabschnitt 93 mit dem Spindelgewinde 28 außer Eingriff gerät. Dies kann durch Schwerkraft, vorzugsweise jedoch durch eine Federeinrichtung erreicht werden, die das Eingriffsteil 92 gegen die Innenwand des Gehäuseabschnitts 21 drückt, jedoch in den Figuren nicht explizit dargestellt ist.

Diese Ausführung der Abstützung zeichnet sich durch ihren besonders einfachen Aufbau aus und gewährleistet darüber hinaus einen sicheren Eingriff zwischen der Abstützung und der Spindel, der ein Durchrutschen der Spindel 41 verhindert.

Die Wirkungsweise der aktiv durch die Spindel 41 angetriebenen Abstützungen 33 ist insbesondere aus Fig. 1 verständlich. Die Spindel 41 wird an ihrem Antriebsabschnitt 26 von Hand oder einem Elektromotor oder dergleichen rotatorisch angetrieben. Die rotatorische Bewegung der Spindel 41 wird durch die Spindelmutter 42, die mit dem Spindelgewinde 28 in Eingriff ist und durch das Verbindungselement 29 drehfest geführt ist, in eine translatorische Bewegung umgewandelt, d.h. die Spindelmutter 42 wird in dem Gehäuse entsprechend Figur 1 nach links bzw. rechts verschoben. Hierdurch wird das schlittenartige Verschiebestück 43, mit dem ein zu verstellendes Maschinenelement verbunden sein kann, ebenfalls linear hin- und herbewegt. Wie später noch näher erläutert werden wird, ist der Längsschlitz 30, durch den sich das Verbindungselement 29 erstreckt, durch ein Verschlußband 100 verschlossen, wobei das Verschlußband entsprechend der Bewegung der Spindelmutter und des Verschiebstückes im Bereich des Verbindungselementes reißverschlußartig geöffnet bzw. geschlossen wird. In Bewegungsrichtung gesehen wird das Verschlußband vor dem Verbindungselement, das sich durch den Längsschlitz erstreckt, aus einer entsprechenden Verschlußnut herausgeführt und hinter dem Verbindungselement in diese Nut wieder hineingeführt.

In einer Ausgangsstellung, in der die Abstützungen 33 durch die entsprechenden Lösemittel außer Eingriff mit der Spindel 41 gehalten werden, werden die Abstützungen 33 in der entsprechenden Stellung gehalten und die Spindel 41 kann gedreht werden, um die Spindelmutter 42 anzutreiben. Bewegt sich die Spindelmutter 42 nur in einem kleinen Verstellbereich, werden die Abstützungen 33 nicht bewegt. Wird die Spindelmutter 42 jedoch darüber hinaus verschoben, stößt die Spindelmutter 42 gegen die zunächst ruhende Abstützung 33 und verschiebt diese in Richtung der Spindelmutterbewegung. Hierdurch wird die entsprechende Abstützung 33 von dem entsprechenden mechanischen Lösemittel, das mit dem Gehäuseabschnitt 21 fest verbunden ist, geschoben, wodurch die Abstützungen 33 mit der Spindel 41 in Eingriff gerät und durch diese selbst schraubenartig angetrieben wird. Wandert die Spindelmutter 42 auch über die nächstfolgende Abstützung 33 hinaus, so wird diese Abstützung ebenfalls verschoben und gerät mit der Spindel 41 in Eingriff. Wird die Spindel 41 gegenläufig gedreht und die Spindelmutter 42 entsprechend rückwärts verschoben, werden die Abstützungen, die das Spindelgewinde 28 klemmen, bzw. mit diesem in Eingriff sind, ebenfalls durch die Spindel 41 rückwärts angetrieben und folgen der Spindelmutter. Laufen die Abstützungen 33 über die erste Raststelle, so wird die erste Abstützung durch das entsprechende Lösemittel von dem Spindelgewinde außer Eingriff gebracht und angehalten. Die nachfolgende Abstützung schiebt die angehaltene Abstützung jedoch weiter und wird selbst an der entsprechenden Raststelle angehalten. Die weiter geschobene Abstützung wird an der nächsten Raststelle entsprechend angehalten.

Die Verschiebbarkeit der Abstützungen entsprechend der verschiedenen Ausführungen wird also dadurch bewirkt, daß die Abstützungen mit der Spindel in Eingriff bringbar sind und durch die Spindel selbst angetrieben werden und daß an Raststellen, an denen die Abstützungen angehalten werden sollen, Lösemechanismen vorgesehen sind, die den Eingriff zwischen der Abstützung und der Spindel lösen, wobei die Abstützung mit dem Lösemechanismus in Eingriff gerät, indem die Abstützung auf diesen geschoben wird. Der Lösemechanismus wird also durch die Verschiebung der Abstützung selbst aktiviert.

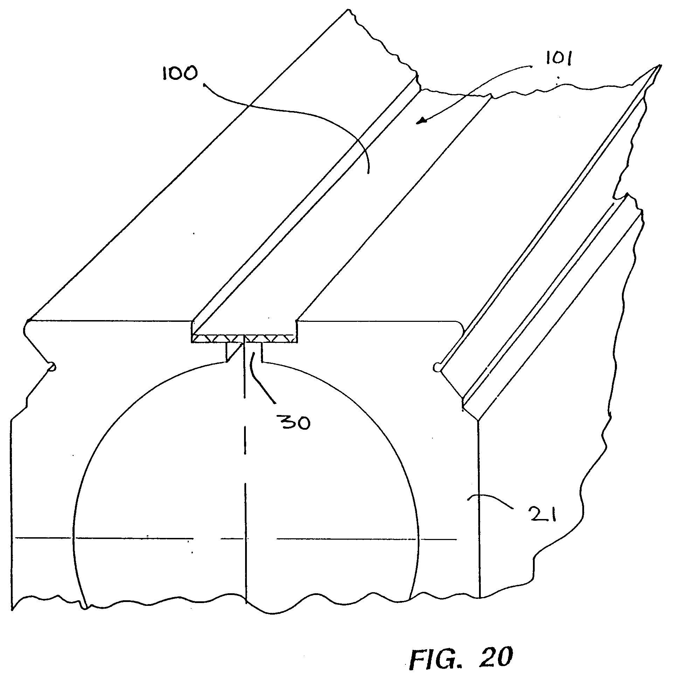

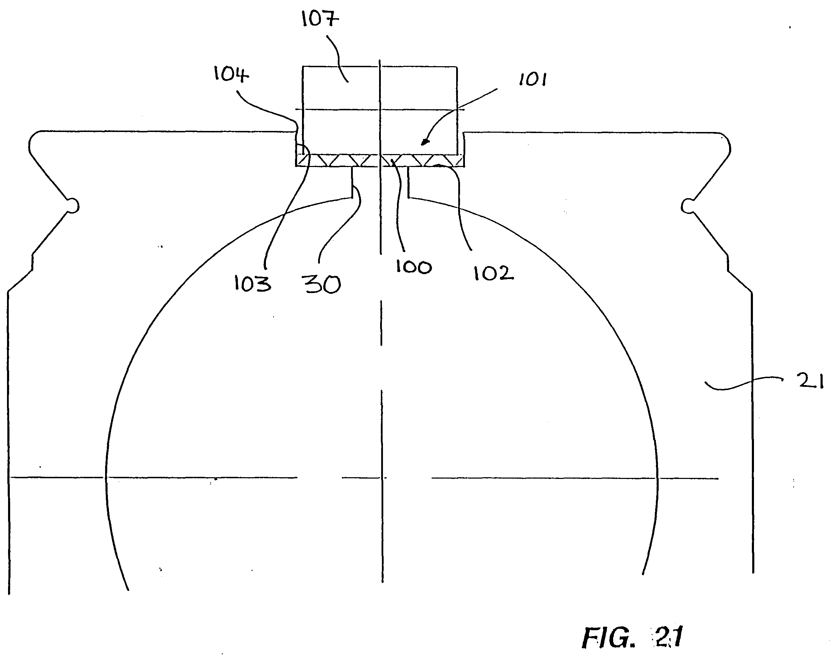

Wie in Fig. 1 gezeigt ist, weist der Spindelgehäuseabschnitt 21 einen Längsschlitz 30 auf, durch den sich das Verbindungselement 29 erstreckt. Um das Eindringen von Staub oder Schmutz in das Innnere des Gehäuses zu verhindern, ist ein elastisches Verschlußband 100 vorgesehen, das den Längsschlitz 30 beidseitig des Verbindungselementes 29 verschließt. Hierbei ist in dem Gehäuseabschnitt 21, wie in Figur 20 gezeigt ist, an die Längsnut 30 angrenzend eine Aufnahmeausnehmung 101 ausgebildet, in der das Verschlußband 100 aufgenommen ist. Wie in Fig. 21 gezeigt ist, besitzt die Aufnahmeausnehmung 101 grundsätzlich einen Boden 102, in den der Längsschlitz 30 mündet, und zwei gegenüberliegende Seitenwände 103, so daß die Aufnahmeausnehmung 101 eine im wesentlichen nutförmige Gestalt hat.

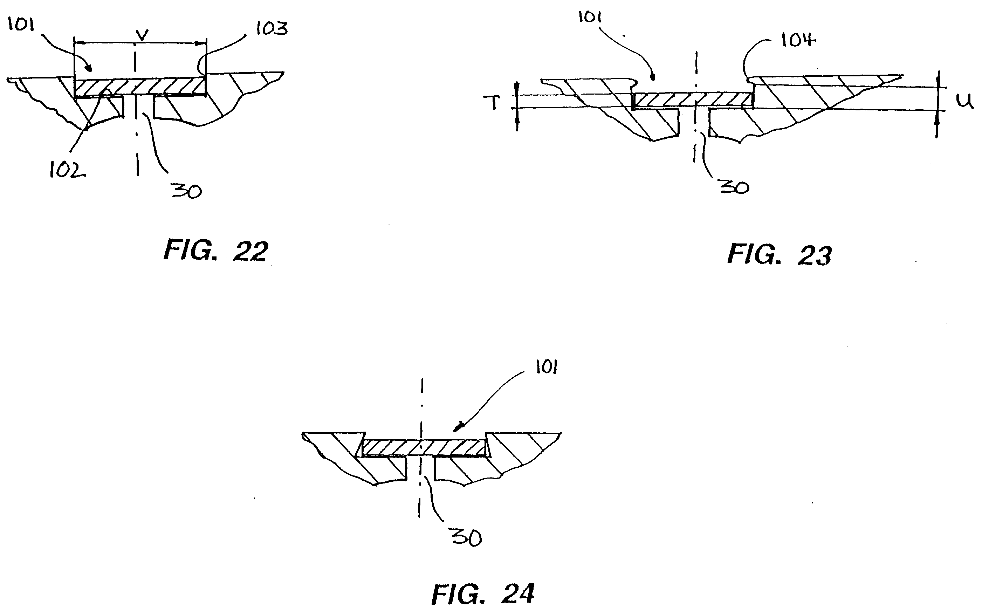

Um den Längsschlitz 30 möglichst dicht zu verschließen, ist vorzugsweise eine Breite V der Aufnahmeausnehmung 101, d.h. der Abstand der beiden Seitenwände 103 voneinander, kleiner als die Breite des Verschlußbandes 100 im entspannten Zustand. Wie in Fig. 22 gezeigt ist, wölbt sich daher das elastische Verschlußband 100 und drückt sich aufgrund seiner Eigenspannung gegen die Seitenwände 103, so daß der Längsschlitz 30 dicht gegenüber dem Gehäuseäußeren abgedichtet ist.

Wie in Fig. 23 zu sehen ist, kann die Breite V der Aufnahmeausnehmung jedoch auch gleich oder größer der Breite des elastischen Verschlußbandes 100 im entspannten Zustand sein, wobei in einem Öffnungsbereich der nutförmigen Ausnehmung 101 zu der Gehäuseaußenseite an den beiden Seitenwänden 103 jeweils ein rippenartiger Vorsprung 104 ausgebildet ist, deren Abstand voneinander kleiner ist als die Breite des Verschlußbandes, um ein unbeabsichtigtes Herausrutschen des Verschlußbandes zu verhindern. Die Breite der Ausnehmung 101 gemäß der Ausführung nach Fig. 23 kann jedoch ebenfalls kleiner sein als die Breite des Verschlußbandes 100, wodurch die Abdichtung weiter verbessert wird. Der Abstand U der Vorsprünge von dem Boden 102 ist vorzugsweise größer als die Dicke T des Verschlußbandes 100, um ein Ein- und Ausfädeln des Verschlußbandes 100 in die Aufnahmeausnehmung 101 zu verbessern, wie später noch erläutert werden wird.

Um das Verschlußband 100 sicher in der Ausnehmung 101 aufzunehmen und den Längsschlitz 30 wirksam gegenüber der Umgebung abzudichten, kann die Aufnahmeausnehmung 101 auch einen schwalbenschwanzförmigen Querschnitt besitzen, wie in Fig. 24 dargestellt ist. Der Öffnungsbereich der schwalbenschwanförmigen Ausnehmung 101 ist auch in dieser Ausführungsform schmaler als das elastische Verschlußband 100 breit ist, so daß ein unbeabsichtigtes Herausrutschen verhindert und eine effektive Abdichtung gewährleistet ist.

Wie in Fig. 1 zu sehen ist, ist mit dem Verbindungselement 29 bzw. mit dem schlittenartigen Verschiebestück 43 ein Verschlußmechanismus verbunden, der das elastische Verschlußband 100 in die Aufnahmeausnehmung 101 drückt bzw. aus dieser heraus entfernt, um das Verschlußband jeweils an der Stelle, an der sich das Verbindungselement 29 durch den Längsschlitz 30 erstreckt, aus der Aufnahmeausnehmung 101 zu entfernen und über das Verbindungselement 29 zu führen. Der Verschlußmechanismus weist eine Bandführungseinrichtung 105 auf, die mit dem Verbindungselement 29 mitbewegt wird.

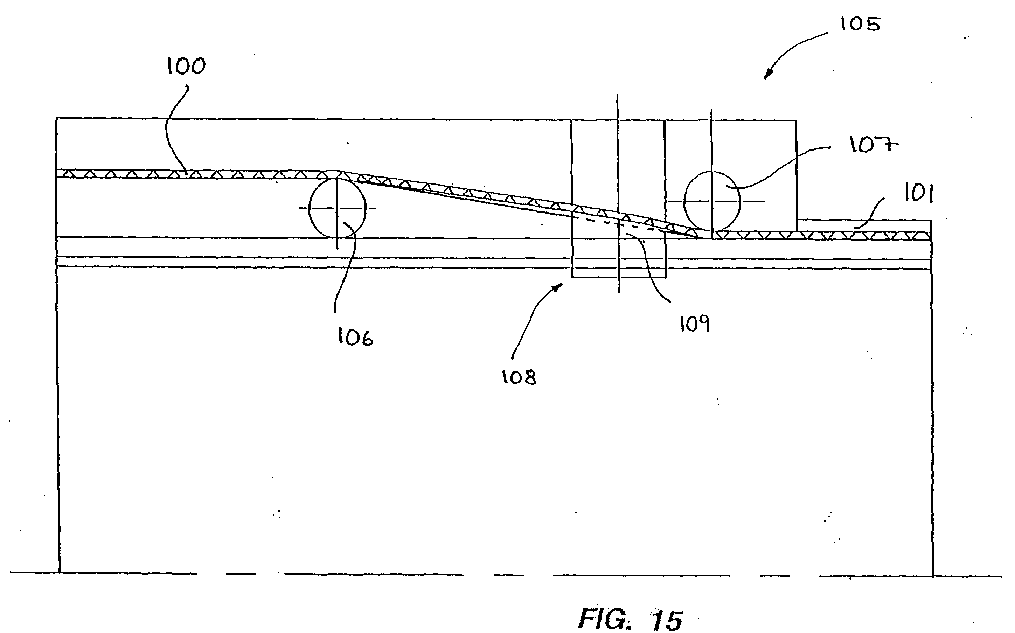

Wie schematisch in Fig. 15 gezeigt ist, weist die Bandführungseinrichtung 105 zwei drehbare Führungswalzen 106 und 107 auf, von denen eine das Führungsband 100 außerhalb der Aufnahmeausnehmung 101 auf der Außenseite des Gehäuses führt, während die andere Führungswalze 107, die mit der gegenüberliegenden Seite des Verschlußbandes 100 (bezogen auf die erste Führungswalze 106) in Berührung ist, das Verschlußband 100, wie in den Fig. 15 und 21 zu sehen ist, in die Aufnahmeausnehmung 101 hineindrückt.

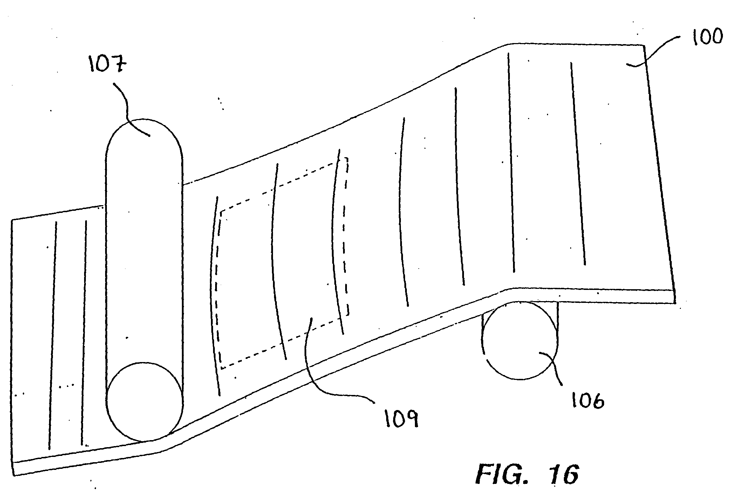

Um das Ein- und Ausfädeln des Verschlußbandes 100 in die nutförmige Ausnehmung 101 zu erleichtern, ist zwischen den beiden Führungswalzen 106 und 107 eine Einrichtung vorgesehen, die die wirksame Bandbreite des Verschlußbandes 100 verringert, insbesondere mindestens bis auf die Öffnungsbreite der Aufnahmeausnehmung 101 verringern. Hierfür ist zwischen den beiden Führungswalzen ein Wölbemechanismus 108 angeordnet, der das Verschlußband 100 zwischen den beiden Führungswalzen 106 und 107 wölbt, wie dies schematisch in Fig. 16 dargestellt ist.

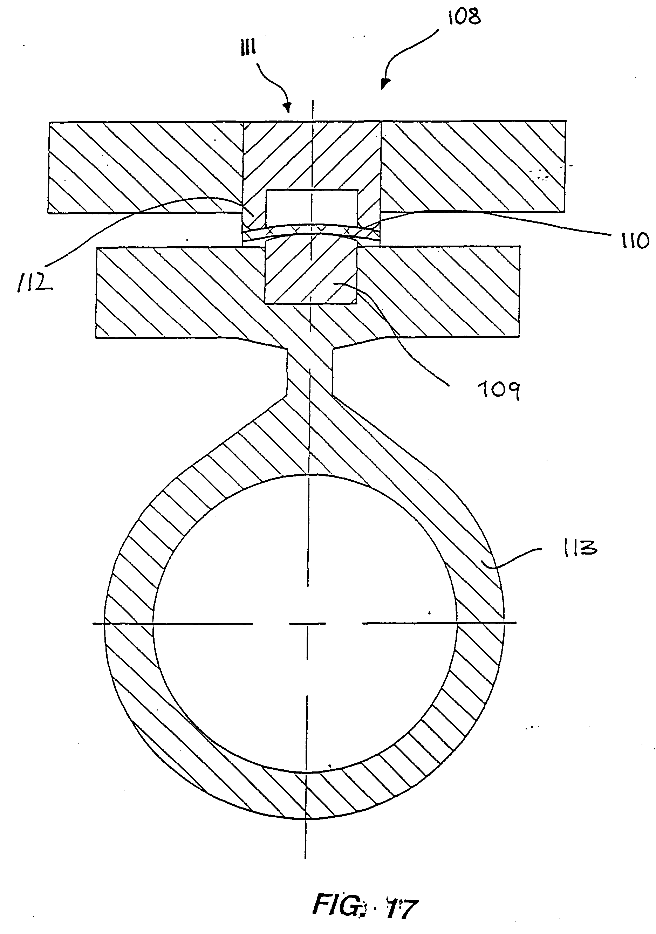

Wie in Fig. 17 gezeigt, besitzt der Wölbemechanismus 108 einen Wölbungskeil 109 der eine quer zur Längsrichtung des Verschlußbandes 100 konvex gewölbte Druckfläche 110 aufweist, die wie in Fig. 15 zu sehen ist, zur Längsrichtung der Aufnahmeausnehmung 101 geneigt ist, um gegen die dem Längsschlitz 30 zugewandte Seite des Verschlußbandes 100 in einem Mittelbereich des Verschlußbandes zu drücken. Auf der gegenüberliegenden Seite des Verschlußbandes ist ein Gegenstück 111 angeordnet, das zwei parallele vorspringende Drucknasen 112 aufweist, die auf die gegenüberliegende Seite des Verschlußbandes 100 in deren Randbereich drücken, so daß sich das Verschlußband 100 infolge der Druckeinwirkung des Wölbungskeils 109 und des Gegenstückes 111 wölbt, wie in Fig. 17 zu sehen ist. Die Drucknasen 112 sind entsprechend der Druckfläche 110 des Wölbungskeils 109 geneigt zur Längsrichtung der Aufnahmeausnehmung und parallel zu der Längsrichtung der gewölbten Druckfläche 110.

Der Druck- bzw. Wölbungskeil 109 kann mit dem Verbindungselement 29 verbunden sein und kann sich zusätzlich durch eine Keilabstützung 113 auf der Spindel 41 abstützen. Der Wölbungskeil sowie die Bandführungsvorrichtung könnten mittels der Abstützung 113 auch durch die Spindel selbst angetrieben werden.

Wie in Fig. 16 schematisch dargestellt ist, drückt der Wölbungskeil 109 in einem Bereich des Verschlußbandes 100 von unten gegen dieses, der zwischen den beiden Führungswalzen 107 und 106 liegt und insbesondere von beiden Führungswalzen beabstandet ist. Hierdurch wird die Tatsache berücksichtigt, daß ein elastisches Band normalerweise nur einachsig gebogen werden kann. Wie in Fig. 16 dargestellt, wird das Verschlußband 100 an der Führungswalze 107 zunächst nach oben (im Sinne der Fig. 16) umgelenkt, und nach der Umlenkung durch den Wölbemechanismus 108 um eine Achse parallel zur Längsrichtung des Verschlußbandes gebogen bzw. gewölbt, um die wirksame Breite des Verschlußbandes zu verringern und das Ein- bzw. Ausfädeln des Bandes in die bzw. aus der Ausnehmung 101 zu erleichtern. Nach der Wölbung des Bandes im Bereich des Wölbungskeiles 109 wird das Band in einem hiervon beabstandeten Bereich durch die Führungswalze 106 umgelenkt. Der Abstand des Wölbemechanismuses von beiden Führungswalzen verhindert wirkungsvoll eine zweiachsige Biegung des Verschlußbandes und einen vorzeitigen Verschleiß des Bandes.

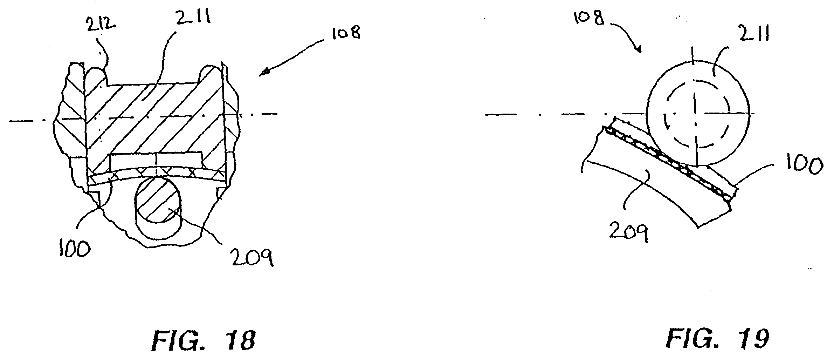

Eine weitere Ausführungsform des Wölbemechanismus 108 ist in den Fig. 18 und 19 gezeigt, wobei anstelle des Wölbekeils ein Wölbedorn 209 verwendet wird, der gegen die dem Längsschlitz 30 zugewandte Seite des Verschlußbandes 100 in dessen Mittelbereich drückt. Auf der gegenüberliegenden Seite des Verschlußbandes ist eine Gegenrolle 211 angeordnet, die drehbar gelagert ist und in den Randbereichen 2 abgerundete Vorsprünge 212 besitzt, die auf die gegenüberliegende Seite des Verschlußbandes 100 drücken. Wie in Fig. 19 gezeigt, wird der Druckdorn 209 im wesentlichen durch einen Stift gebildet, der gekröpft ist, um das Verschlußband 100 sanft in die gewölbte Form zu drücken.

Die Wirkungsweise des Verschlußbandes und der Bandführungseinrichtung ist aus Fig. 1 ersichtlich. Wenn die Spindel gedreht wird und dementsprechend die Spindelmutter 42 in Fig. 1 nach links oder rechts bewegt wird, muß der Längsschlitz 30 im Bereich des Verbindungselementes 29 jeweils geöffnet sein. In diesem Bereich wird das Verschlußband außerhalb der Aufnahmeausnehmung geführt und an dem Verbindungselement 29 vorbeigelenkt. Entsprechend der Bewegung der Spindelmutter 42 nach links oder rechts wird die Bandführungseinrichtung synchron mit der Spindelmutter nach links oder rechts bewegt, wodurch das Verschlußband in Bewegungsrichtung gesehen vor dem Verbindungselement 29 aus der Aufnahmeausnehmung 101 herausgeführt (unter Wölbung bzw. Verdrehung des Verschlußbandes) und hinter dem Verbindungselement 29 wieder in die Aufnahmeausnehmung (wiederum unter Wölbung bzw. Verdrehung des Bandes) hineingedrückt. Wie in Fig. 1 zu sehen ist, wird die Bandführungseinrichtung und der Wölbemechanismus synchron mit dem Verbindungselement 29 bzw. der Spindelmutter 42 mitgeführt, so daß das Verschlußband 100 reißverschlußartig ein- und ausgefädelt wird. Die Bandführungseinrichtung und der Wölbemechanismus sind, obwohl in Fig. 1 nur auf einer Seite des Verbindungselementes 29 dargestellt, auf beiden Seiten des Verbindungselementes 29 vorgesehen.

Das Spindelgetriebe ist durch das Verschließen des Längsschlitzes 30 wirksam vor dem Eindringen von Staub und Schmutz geschützt. Hierbei liegt das Prinzip zugrunde, ein elastisches Verschlußband in eine Aufnahmeausnehmung, deren Öffnungsbereich schmäler ist als die Breite des Verschlußbandes, einzuführen, wobei die wirksame Breite des Verschlußbandes verringert wird, um das Einführen zu erleichtern und Verschleiß des Bandes zu verhindern. Neben der Lösung, das Band zu wölben, könnte die wirksame Breite auch dadurch verringert werden, daß das Band beispielsweise durch Kippen der Führungswalze 106 verdreht und dadurch aus der Ausnehmung 101 herausgedreht wird. Dadurch könnte das Verbindungselement 29 besonders einfach gestaltet sein, da das Verschlußband nicht über dieses hinweg sondern an diesem vorbei geführt werden kann. Dadurch, daß die wirksame Breite des Bandes beim Ein- und Ausfädeln des selben verringert wird, ergibt sich der Vorteil, daß ein einfaches und billiges Verschlußband ohne besonderen Querschnitt verwendet werden kann und das elastische Andrücken des Bandes gegen die Seitenwände der Aufnahmeausnehmung ein dichtes Verschließen des Längsschlitzes 30 gewährleistet.

## Patentansprüche

1. Lineargetriebeeinheit mit einem Rahmen, einer drehbar an dem Rahmen (20) gelagerten Spindel (41) mit einer zugehörigen Spindelmutter (42), und zumindest einer Abstützung (33) für die Spindel (41), wobei die Abstützung (33) relativ zu dem Rahmen (20) in Längsrichtung verstellbar ist, dadurch gekennzeichnet, daß die Abstützung (33) zur Längsverstellung mit der Spindel (41) in Eingriff bringbar ist und Mittel (74) zum Lösen des Eingriffs zwischen der Abstützung und der Spindel vorgesehen sind, wobei die Abstützung (33) eine Spindelausnehmung (36, 37; 82, 83; 91) aufweist, in der die Spindel (41) aufgenommen ist, derart, daß eine Außenseite eines Spindelgewindes (28) mit der Spindelausnehmung in Eingriff bringbar ist.

2. Lineargetriebeeinheit nach Anspruch 1, dadurch gekennzeichnet, daß die Abstützung (33) mit dem Spindelgewinde (28) in Klemmeingriff bringbar ist.

3. Lineargetriebeeinheit nach Anspruch 1, dadurch gekennzeichnet, daß die Abstützung (33) mit dem Spindelgewinde (28) formschlüssig in Eingriff bringbar ist.

4. Lineargetriebeeinheit nach zumindest einem der Ansprüche 1 bis 3, dadurch gekennzeichnet, daß der Rahmen (20) einen Gehäuseabschnitt (21) aufweist, der die Spindel (41) umgibt, wobei die Abstützung (33) vorzugsweise an einer Innenwand des Gehäuseabschnittes längsverschieblich und drehfest geführt ist.

5. Lineargetriebeeinheit nach zumindest einem der Ansprüche 1 bis 4, dadurch gekennzeichnet, daß die Abstützung (33) ein erstes und ein zweites Abstützteil (34, 35; 80, 81) aufweist, die miteinander verbunden und relativ zueinander beweglich sind, insbesondere zwischen einer ersten Stellung, in der die Spindel (41) mit zumindest einem der Abstützteile in Eingriff bringbar ist und einer zweiten Stellung, in der der Eingriff gelöst ist.

6. Lineargetriebeeinheit nach zumindest einem der Ansprüche 1 bis 5, dadurch gekennzeichnet, daß eine Federeinrichtung (39;62) zur Vorspannung der Abstützung (33) in deren Eingriffstellung vorgesehen ist, wobei vorzugsweise die Lösemittel (74) mit der Federeinrichtung (39) in Eingriff bringbar sind.

7. Lineargetriebeeinheit nach zumindest einem der Ansprüche 1 bis 6, dadurch gekennzeichnet, daß die Lösemittel ein Eingriffsteil (49;54) aufweisen, das in Abhängigkeit von der Längsstellung der Abstützung (33) mit diesen in Eingriff bringbar ist und vorzugsweise fest mit dem Rahmen (20), insbesondere mit einer Innenwand des Gehäuseabschnittes (21) verbunden ist.

8. Lineargetriebeeinheit nach zumindest einem der Ansprüche 5 bis 7, dadurch gekennzeichnet, daß die beiden Abstützteile (34, 35) jeweils eine Spindelausnehmung (36, 37) besitzen, in der die Spindel (41) aufgenommen ist und in Spindellängsrichtung hintereinander angeordnet sind, wobei die Abstützteile mit den Längsachsen der Spindelausnehmungen zueinander in und außer Koaxialität bringbar sind.

9. Lineargetriebeeinheit nach zumindest einem der vorhergehenden Ansprüche 6 bis 8, dadurch gekennzeichnet, daß die Abstützung (33) an einer der Spindel (41) zugewandten Innenseite zumindest einen insbesondere rippenartigen Vorsprung aufweist, der zum formschlüssigen Eingriff mit dem Spindelgewinde (28) vorgesehen ist.

10. Lineargetriebeeinheit nach zumindest einem der Ansprüche 5 bis 9, dadurch gekennzeichnet, daß die beiden Abstützteile (34, 35) relativ zueinander um eine zur Längsrichtung der Spindel (41) im wesentlichen senkrechte Achse kippbar und durch eine Federeinrichtung (39) in eine zueinander verkantete Stellung vorgespannt sind, wobei vorzugsweise zwischen den beiden Abstützteilen zwei diametral gegenüberliegend angeordnete Federelemente (45, 46) vorgesehen sind, von denen zumindest eine einen im entspannten Zustand bogenförmig gekrümmten Abschnitt (47) besitzt.

11. Lineargetriebeeinheit nach Anspruch 10, dadurch gekennzeichnet, daß der gekrümmte Abschnitt (47) des Federelementes (46) mit einem Eingriffsteil (49) der Lösemittel (74) in Eingriff bringbar ist, wobei der gekrümmte Abschnitt vorzugsweise im Eingriffszustand eine geringere Krümmung besitzt als im Nichteingriffszustand und insbesondere in Spindel längsrichtung an einer Umfangsseite der Abstützung (33) angeordnet und einer Innenwand des Gehäuseabschnittes (21) zugewandt ist und das Eingriffsteil (49) einen von der Innenwand vorspringenden, in Spindellängsrichtung keilförmigen Nockenabschnitt aufweist.

12. Lineargetriebeeinheit nach Anspruch 11, dadurch gekennzeichnet, daß der gekrümmte Abschnitt (47) des Federelementes (46) mit einem Eingriffsteil (54) der Lösemittel (74) in Eingriff bringbar ist und das Eingriffsteil (54) einen sich in Spindel längsrichtung erstreckenden Schienenabschnitt aufweist, der zumindest eine Ausnehmung (55) zur Aufnahme des gekrümmten Abschnittes (47) aufweist, wobei vorzugsweise der gekrümmte Abschnitt in Spindellängsrichtung in einer Nut (53) in einer Umfangsseite der Abstützung (33) angeordnet ist und der Schienenabschnitt in die Nut eingreift.

13. Lineargetriebeeinheit nach zumindest einem der Ansprüche 5 bis 9, dadurch gekennzeichnet, daß wenigstens eines der Abstützteile (34, 35) relativ zu dem anderen um eine zur Längsachse der Spindel (41) parallele und exzentrische Achse verdrehbar ist und zwischen den beiden Abstützteilen vorzugsweise eine Drehfedereinrichtung (62) zur Vorspannung der beiden Abstützteile zueinander vorgesehen ist und vorzugsweise eine Drehsteuereinrichtung (75) zur Steuerung der rotatorischen Stellung der beiden Abstützteile (34, 35) relativ zueinander in Abhängigkeit der axialen Stellung derselben vorgesehen ist, wobei insbesondere zumindest einem der Abstützteile (35) eine Verdrehvorrichtung (77, 78) zugeordnet ist, die vorzugsweise ein an einer Innenwand des Gehäuseabschnittes (21) angeordnetes, im wesentlichen keilförmig profiliertes Nockenteil und ein an dem Abstützteil (35) vorgesehenes Eingriffselement, insbesondere eine Längsnut, aufweist.

14. Lineargetriebeeinheit nach zumindest einem der Ansprüche 5 bis 9, dadurch gekennzeichnet, daß die Abstützung (33) zwei halbschalenförmige Abstützabschnitte (80, 81) aufweist, die relativ zueinander radial gegen die Spindel (41) gespannt und zumindest auf einer Seite der Spindel voneinander getrennt sind, und die Lösemittel eine Aufspreizeinrichtung (85), die vorzugsweise eine Längsnut (88, 89) zwischen den beiden Abstützabschnitten (80, 81), und ein Aufspreizteil (86), insbesondere einen mit der Längsnut in Eingriff bringbaren Spreiznocken, zum Aufspreizen der Abstützabschnitte aufweist.

15. Lineargetriebeeinheit nach zumindest einem der Ansprüche 1 bis 14, dadurch gekennzeichnet, daß mehrere vorzugsweise auf beiden Seiten der Spindelmutter (42) angeordnete Abstützungen (33) vorgesehen sind.

16. Lineargetriebeeinheit nach zumindest einem der vorhergehenden Ansprüche 1 bis 15, dadurch gekennzeichnet, daß ein die Spindel (41) mit der zugehörigen Spindelmutter (42) aufnehmendes Gehäuse (21) einen Längsschlitz (30) aufweist, durch den sich ein mit der Spindelmutter verbundenes Verbindungselement (29) erstreckt, und ein elastisches Verschlußband (100) zum Verschließen des Längsschlitzes vorgesehen ist, wobei das Gehäuse eine Aufnahmeausnehmung (101) zur Aufnahme des Verschlußbandes aufweist, deren Öffnungsbereich zur Gehäuseaußenseite eine geringere Breite (V) als das Verschlußband hat und eine Bandführungseinrichtung (105) zur Verringerung der wirksamen Bandbreite vorgesehen ist.

17. Lineargetriebeeinheit nach Anspruch 16, dadurch gekennzeichnet, daß die Bandführungseinrichtung (105) einen Wölbemechanismus (108) zur Führung des Verschlußbandes (100) in einem gewölbten Zustand beim Ein- bzw. Ausfädeln in die bzw. aus der Aufnahmeausnehmung (101) aufweist, wobei vorzugsweise der Wölbemechanismus (108) einen Wölbungskeil (109), der mit dem Verschlußband (100) zumindest in einem Mittelbereich des Verschlußbandes in Berührung und vorzugsweise auf einer dem Längsschlitz (30) zugewandten Seite des Verschlußbandes angeordnet ist, und ein Gegenstück (111) aufweist, das auf der dem Wölbungskeil gegenüberliegenden Seite des Verschlußbandes angeordnet und zumindest mit Randbereichen des Verschlußbandes in Berührung ist, daß vorzugsweise der Wölbungskeil (109) eine quer zur Längsrichtung des Verschlußbandes (100) konvex gewölbte Druckfläche (110) aufweist, die vorzugsweise zur Längsrichtung der Aufnahmeausnehmung (101) geneigt ist und das Gegenstück (111) vorzugsweise zwei U-förmig vorspringende Drucknasen (112) aufweist, die sich parallel zu einer Längsrichtung des Wölbungskeils (109) erstrecken, und daß der Wölbemechanismus (108) in Verschlußbandlängsrichtung von den Führungselementen (106, 107) beabstandet und zwischen diesen angeordnet ist.

18. Lineargetriebeeinheit nach Anspruch 16 oder 17, dadurch gekennzeichnet, daß die Bandführungseinrichtung (105) beidseitig des Öffnungsbereiches der Aufnahmeausnehmung (101) jeweils zumindest ein Führungselement (106, 107), insbesondere eine drehbare Führungswalze, aufweist, wobei vorzugsweise eines der Führungselemente (107) sich in die Aufnahmeausnehmung (101) hinein erstreckt.

19. Lineargetriebeeinheit nach zumindest einem der Ansprüche 16 - 18, dadurch gekennzeichnet, daß die Bandführungseinrichtung (105) in Spindel längsrichtung, vorzugsweise synchron mit der Spindelmutter (42), verfahrbar ist.

20. Lineargetriebeeinheit nach zumindest einem der Ansprüche 16 bis 19, dadurch gekennzeichnet, daß das Verschlußband (100) an dem Verbindungselement (29) vorbeigeführt und beidseitig dessen in der Aufnahmeausnehmung (101) aufgenommen ist, wobei vorzugsweise auf beiden Seiten des Verbindungselementes (29) jeweils eine Bandführungseinrichtung (105) vorgesehen ist.

21. Lineargetriebeeinheit nach zumindest einem der Ansprüche 16 bis 20, dadurch gekennzeichnet, daß die Aufnahmeausnehmung (101) eine im wesentlichen nutförmige Gestalt mit zwei Seitenwänden (103) und einem Boden (102), mit dem der Längsschlitz (30) verbunden ist, aufweist, wobei die Seitenwände (103) vorzugsweise in einem dem Boden gegenüberliegenden Endbereich jeweils einen insbesondere rippenartigen Vorsprung (104) aufweisen, wobei vorzugsweise der Abstand (U) der Vorsprünge (104) von dem Boden (102) der Aufnahmeausnehmung (101) größer als die Dicke (T) des Verschlußbandes (100) ist, vorzugsweise der Abstand (V) der beiden Seitenwände (103) voneinander größer ist als die Breite des Verschlußbandes (100) und insbesondere das Verschlußband (100) eine Breite hat, die größer ist als der Abstand (V) der beiden Seitenwände (103) voneinander derart, daß das Verschlußband (100) zwischen den beiden Seitenwänden (103) elastisch geklemmt ist.

## Claims

1. Linear drive unit with a frame, a spindle (41) mounted in rotary manner on the frame (20) and having an associated spindle nut (42), as well as at least one support (33) for the spindle (41), the support (33) being longitudinally adjustable relative to the frame (20), characterized in that the support (33) is engageable with the spindle (41) for longitudinal adjustment and means (74) are provided for releasing the engagement between the support and the spindle, the support (33) having a spindle recess (36, 37; 82, 83; 91), in which is received the spindle (41) in such a way that an outside of a spindle thread (28) is engageable with the spindle recess.

2. Linear drive unit according to claim 1, characterized in that the support (33) can be brought into clamping engagement with the spindle thread (28).

3. Linear drive unit according to claim 1, characterized in that the support (33) can be positively engaged with the spindle thread (28).

4. Linear drive unit according to at least one of the claims 1 to 3, characterized in that the frame (20) has a housing section (21), which embraces the spindle (41), the support (33) being guided in non-rotary, longitudinally displaceable manner preferably on an inner wall of the housing section.

5. Linear drive unit according to at least one of the claims 1 to 4, characterized in that the support (33) has a first and a second support part (34, 35; 80, 81), which are interconnected and movable relative to one another, particularly between a first position in which the spindle (41) is engageable with at least one of the support parts and a second position in which the engagement is eliminated.

6. Linear drive unit according to at least one of the claims 1 to 5, characterized in that a spring mechanism (39; 62) is provided for pretensioning the support (33) in its engagement position and preferably the release means (74) are engageable with the spring mechanism (39).

7. Linear drive unit according to at least one of the claims 1 to 6, characterized in that the release means have an engagement part (49; 54), which is engageable with the support (33) as a function of the longitudinal position thereof and is preferably firmly connected to the frame (20), particularly with an inner wall of the housing section (21).

8. Linear drive unit according to at least one of the claims 5 to 7, characterized in that the two support parts (34, 35) in each case have a spindle recess (36, 37) in which the spindle (41) is received and are successively arranged in the spindle longitudinal direction, the support parts can be brought into and out of a mutual coaxial arrangement with the longitudinal axes of the spindle recesses.

9. Linear drive unit according to at least one of the preceding claims 6 to 8, characterized in that the support (33) is provided on an inside facing the spindle (41) with at least one more particularly rib-like projection for positive engagement with the spindle thread (28).

10. Linear drive unit according to at least one of the claims 5 to 9, characterized in that the two support parts (34, 35) can be tilted relative to one another about an axis substantially perpendicular to the longitudinal direction of the spindle (41) and are pretensioned by a spring mechanism (39) in a mutually tilted position and preferably between the two support parts are provided two diametrically facing spring elements (45, 46), whereof at least one has an arcuately curved portion (47) in the relaxed state.

11. Linear drive unit according to claim 10, characterized in that the curved portion (47) of the spring element (46) is engageable with the engagement part (49) of the release means (74), in which in the engagement state the curved portion preferably has a smaller curvature than in the non-engagement state and in particular in the spindle longitudinal direction is positioned on a circumferential side of the support (33) and faces an inner wall of the housing section (21) and the engagement part (49) has a wedge-shaped cam section in the spindle longitudinal direction projecting from the inner wall.

12. Linear drive unit according to claim 11, characterized in that the curved portion (47) of the spring element (46) is engageable with an engagement part (54) of the release means (74) and the engagement part (54) has a rail section extending in the spindle longitudinal direction and which has at least one recess (55) for receiving the curved portion (47), in which the curved portion in the spindle longitudinal direction is preferably placed in a groove (53) in a circumferential side of the support (33) and the rail section engages in the groove.

13. Linear drive unit according to at least one of the claims 5 to 9, characterized in that at least one of the support parts (34, 35) is rotatable relative to the other about an axis parallel and eccentric to the longitudinal axis of the spindle (41) and between the two support parts is preferably provided a torsion spring device (62) for pretensioning the two support parts relative to one another and preferably a rotation control device (75) for controlling the rotary position of the two support parts (34, 35) relative to one another is provided as a function of the axial position thereof and at least one of the support parts (35) has associated with it a twisting device (77, 78), which preferably has a substantially wedge-shaped, profiled cam part located on an inner wall of the housing section (21) and an engagement element provided on the support part (35), more particularly a longitudinal groove.

14. Linear drive unit according to at least one of the claims 5 to 9, characterized in that the support (33) has two half shell-like support sections (80, 81), which are tensioned relative to one another radially against the spindle (41) and at least on one side of the spindle are separated from one another and the release means have an expanding device (85), which preferably has a longitudinal groove (88, 89) between the two support sections (80, 81) and an expanding part (86), particularly an expanding cam engageable with the longitudinal groove, for expanding the support sections.

15. Linear drive unit according to at least one of the claims 1 to 14, characterized in that several supports (33) are provided, preferably on both sides of the spindle nut (42).

16. Linear drive unit according to at least one of the preceding claims 1 to 15, characterized in that a housing (21) receiving the spindle (41) with the associated spindle nut (42) has an elongated slot (30) through which extends a connecting element (29) connected to the spindle nut and an elastic closing band (100) is provided for closing the elongated slot, the housing having a reception recess (101) for receiving the closing band, whose opening area has a smaller width (V) towards the housing outside than the closing band and a band guiding device (105) is provided for reducing the effective band width.

17. Linear drive unit according to claim 16, characterized in that the band guiding device (105) has a cambering mechanism (108) for guiding the closing band (100) in a cambered state during threading and unthreading with respect to the reception recess (101) and preferably the cambering mechanism (108) has a cambering wedge (109), which is in contact with the closing band (100) at least in a central area of said band and is preferably located on a closing band side facing the elongated slot (30), whilst having a counterpart (111), which is located on the closing band side opposite to the cambering wedge and is at least in contact with marginal areas of the closing band, that preferably the cambering wedge (109) has a pressure surface (110) convexly cambered transversely to the longitudinal direction of the closing band (100) and which is preferably inclined to the longitudinal direction of the reception recess (101) and the counterpart (111) preferably has two U-shaped projecting pressure noses (112) extending parallel to a longitudinal direction of the cambering wedge (109), and that the cambering mechanism (108) in the closing band longitudinal direction is spaced from and positioned between the guide elements (106, 107).

18. Linear drive unit according to claim 16 or 17, characterized in that on either side of the opening area of the reception recess (101), the band guiding device (105) has in each case at least one guide element (106, 107), particularly a rotary guide roller and preferably one of the guide elements (107) extends into the reception recess (101).

19. Linear drive unit according to at least one of the claims 16 to 18, characterized in that the band guiding device (105) is movable in the spindle longitudinal direction, preferably synchronously with the spindle nut (42).

20. Linear drive unit according to at least one of the claims 16 to 19, characterized in that the closing band (100) is guided past the connecting element (29) and received in the reception recess (101) on either side thereof and preferably on both sides of the connecting element (29) is provided a band guiding device (105).

21. Linear drive unit according to at least one of the claims 16 to 20, characterized in that the reception recess (101) has a substantially groove-like design with two side walls (103) and a base (102), to which the elongated slot (30) is connected, the side walls (103) in an end region facing the base in each case have in particular a rib-like projection (104) and preferably the,spacing (U) of the projections (104) from the base (102) of the reception recess (101) is greater than the thickness (T) of the closing band (100) and preferably the mutual spacing (V) of the two side walls (103) exceeds the width of the closing band (100) and in particular the closing band (100) has a width exceeding the mutual spacing (V) of the two side walls (103) in such a way that the closing band (100) is elastically clamped between the two side walls (103).

## Revendications

1. Unité de transmission mécanique pour entrainement linéaire avec un bâti, une broche filetée (41), qui est logée mobilement sur le bâti (20), avec un écrou de broche (42) associé, et au moins un appui (33) pour la broche filetée (41), l'appui (33) étant réglable relativement par rapport au bâti (20) en direction longitudinale, caractérisée en ce que l'appui (33) peut être mis en prise pour un déplacement longitudinal avec la broche filetée (41), et que des moyens (74) sont prévus pour le dégagement de la prise entre l'appui et la broche filetée, l'appui (33) présentant un creux pour broche (36, 37; 82, 83; 91), dans lequel la broche filetée (41) est logée de sorte qu'une face extérieure d'un filet de broche (28) peut être mise en engagement avec le creux pour broche.

2. Unité de transmission mécanique pour entrainement linéaire d'après la revendication 1, caractérisée en ce que l'appui (33) peut être mis en prise par engagement par serrage avec le filet de broche (28).

3. Unité de transmission mécanique pour entrainement linéaire d'après la revendication 1, caractérisée en ce que l'appui (33) peut être mis en prise par engagement positif avec le filet de broche (28).

4. Unité de transmission mécanique pour entrainement linéaire d'après au moins une des revendications de 1 à 3, caractérisée en ce que le bâti (20) présente une section de cadre (21), qui entoure la broche filetée (41), l'appui (33) étant de préférence guidée à la paroi intérieure de la section de cadre de manière longitudinalement mobile et à résistant de torsion.

5. Unité de transmission mécanique pour entrainement linéaire d'après au moins une des revendications de 1 à 4, caractérisée en ce que l'appui (33) présente une première et une deuxième pièce d'appui (34, 35; 80, 81), qui sont jointes l'une avec l'autre et mobiles relativement entr'elles notamment entre une première position, dans laquelle la broche (41) peut être mise en prise au moins avec une des pièces d'appui et une deuxième position dans laquelle la prise est dégagée.

6. Unité de transmission mécanique pour entrainement linéaire d'après au moins une des revendications de 1 à 5, caractérisée en ce qu'un moyen à ressort (39;62) est prévu pour la précontrainte de l'appui (33) dans sa position d'engagement, où de préférence les moyens de dégagement (74) peuvent être mis en prise avec le moyen à ressort (39).

7. Unité de transmission mécanique pour entrainement linéaire d'après au moins une des revendications de 1 à 6, caractérisée en ce que les moyens de dégagement présentent un élément de prise (49; 54), qui peut être mis en prise avec ceux-ci en fonction de la position longitudinale de l'appui (33) et qui est de préférence fixé de manière inamovible avec le bâti (20), notamment avec une paroi intérieure de la section de cadre (21).

8. Unité de transmission mécanique pour entrainement linéaire d'après au moins une des revendications de 5 à 7, caractérisée en ce que les deux pièces d'appui (34, 35) possèdent respectivement un creux pour broche (36, 37), dans lequel la broche (41) est logée et qui sont disposées l'une derrière l'autre en direction longitudinale de la broche, les pièces d'appui pouvant être mises en position coaxiale et hors de cette position l'une par rapport à l'autre avec les axes longitudinaux des creux pour broche.

9. Unité de transmission mécanique pour entrainement linéaire d'après au moins une des revendications de 6 à 8, caractérisée en çe que l'appui (33) présente d'un côté intérieur, en face de la broche (41), au moins une saillie notamment en forme de nervure, laquelle saillie est prévue pour une prise à engagement positif avec le filet de broche (28).

10. Unité de transmission mécanique pour entrainement linéaire d'après au moins une des revendications de 5 à 9, caractérisée en ce que les deux pièces d'appui (34, 35) peuvent être basculées relativement l'une par rapport à l'autre autour d'un axe essentiellement vertical par rapport à la direction longitudinale de la broche (41) et qu'elles sont précontraintes par un moyen à ressort (39) dans une position penchée l'une par rapport à l'autre, deux éléments à ressort (45, 46), disposés de manière diamètralement opposée, étant prévus de préférence entre les deux pièces d'appui, dont au moins un présente une section courbée (47) en forme d'arc dans son état détendu.

11. Unité de transmission mécanique pour entrainement linéaire d'après la revendication 10, caractérisée en ce que la section courbée (47) de l'élément à ressort (46) peut être mise en prise avec une pièce d'engagement (49) des moyens de dégagement (74), la section courbée présentant de préférence dans l'état d'engagement une courbure inférieure qu'en état non engagé et notamment étant disposée en direction longitudinale de broche d'un côté circonférenciel de l'appui (33) et étant orientée face à une paroi intérieure de la section de cadre (21) et la pièce d'engagement (49) présentant une section de came saillant de la paroi intérieure en forme de coin en direction longitudinale de broche.

12. Unité de transmission mécanique pour entrainement linéaire d'après la revendication 11, caractérisée en ce que la section courbée (47) de l'élément à ressort (46) peut être mise en prise avec une pièce d'engagement (54) des moyens de dégagement (74) et que la pièce d'engagement (54) présente une section de rail s'étendant en direction longitudinale de broche, laquelle section présente au moins un creux (55) pour le logement de la section courbée (47), la section courbée étant de préférence disposée en direction longitudinale de broche dans une rainure (53) sur un côté circonférenciel de l'appui (33) et la section de rail faisant prise dans la rainure.

13. Unité de transmission mécanique pour entrainement linéaire d'après au moins une des revendications de 5 à 9, caractérisée en ce qu'au moins une des pièces d'appui (34, 35) peut être angulairement déplacée relativement par rapport à l'autre autour d'un axe parallèle et excentrique par rapport à l'axe longitudinal de la broche (41) et qu'entre les deux pièces d'appui est prévu de préférence un moyen à ressort à branches (62) pour la précontrainte mutuelle des deux pièces d'appui et que de préférence un moyen de commande de rotation (75) pour la commande de la position rotatoire des deux pièces d'appui (34, 35) relativement l'une par rapport à l'autre en fonction de la position axiale de celles-ci, où notamment un dispositif de torsion (77, 78) est associé au moins à une des pièces d'appui (35), lequel présente de préférence un élément de came disposé à la paroi intérieure de la section de cadre (21) et profilé essentiellement en forme de coin, et un élément d'engagement prévu sur la pièce d'appui (35), notamment une rainure longitudinale.

14. Unité de transmission mécanique pour entrainement linéaire d'après au moins une des revendications de 5 à 9, caractérisée en ce que l'appui (33) présente deux sections d'appui (80, 81) en forme de semi-coquille tendues l'une envers l'autre de manière radiale contre la broche (41) et qui sont séparées l'une de l'autre au moins d'un côté de la broche, et que les moyens de dégagement présentent un moyen d'expansion (85), qui présente de préférence une rainure longitudinale (88, 89) entre les deux sections d'appui (80, 81), et un élément d'expansion (86), notamment une came d'expansion pouvant être mise en prise avec la rainure longitudinale, pour l'écartement des sections d'appui.

15. Unité de transmission mécanique pour entrainement linéaire d'après au moins une des revendications de 1 à 14, caractérisée en ce que plusieurs appuis (33) sont prévus, étant disposés de préférence sur les deux côtés de l'écrou de broche (42).

16. Unité de transmission mécanique pour entrainement linéaire d'après au moins une des revendications de 1 à 15, caractérisée en ce qu'un boîtier (21) logeant la broche (41) avec l'écrou de broche (42) associé présente une encoche longitudinale (30), à travers laquelle s'étend un élément de raccordement(29) joint à l'écrou de broche, et une bande d'occlusion (100) pour la fermeture de l'encoche longitudinale, le boîtier présentant un creux de logement (101) pour le logement de la bande d'occlusion, dont le domaine d'ouverture vers le côté extérieur du boîtier présente une largeur (V) inférieure par rapport à la bande d'occlusion et qu'un moyen de guidage de bande (105) est prévu pour la réduction de la largeur de bande effective.

17. Unité de transmission mécanique pour entrainement linéaire d'après la revendication 16, caractérisée en ce que le moyen de guidage de la bande (105) présente un mécanisme de courbure (108) pour la conduite de la bande d'occlusion (100) dans un état courbé pendant l'enfilage dans le creux de logement (101) ou encore pendant la sortie hors de celui-ci, où de préférence le mécanisme de courbure (108) présente un coin de courbure (109), qui est en contact avec la bande d'occlusion (100) au moins dans un domaine central de la bande d'occlusion et qui est de préférence disposé d'un côté orienté face à l'encoche longitudinale (30) de la bande d'occlusion, et un contre-élément (111), qui est disposé sur le côté de la bande d'occlusion opposé au coin de courbure et qui est en contact au moins avec des domaines des bords de la bande d'occlusion, en ce que le coin de courbure (109) présente de préférence une surface de pressage (110) courbée de manière convexe transversalement par rapport à la direction longitudinale de la bande d'occlusion (100), surface qui est de préférence penchée en direction longitudinale du creux de logement (101) et qui présente le contre-élément (111) de préférence deux ergots de pressage (112) saillant en forme de U, qui s'étendent parallèlement à une direction longitudinale du coin de courbure (109), et en ce que le mécanisme de courbure (108) est écarté des éléments de conduite (106, 107) en direction longitudinale de bande d'occlusion èt disposé entre ceux-ci.

18. Unité de transmission mécanique pour entrainement linéaire d'après la revendication 16 ou 17, caractérisée en ce que le moyen de conduite de bande (105) présente des deux côtés du domaine d'ouverture du creux de logement (101) respectivement au moins un élément de guidage (106, 107), notamment un rouleau-guide rotatif, où de préférence un des éléments de guidage (107) s'étend jusqu'à l'intérieur du creux de logement (101).

19. Unité de transmission mécanique pour entrainement linéaire d'après au moins une des revendications de 16 à 18, caractérisée en ce que le moyen de conduction de bande (105) est mobile en direction longitudinale de broche, de préférence de manière synchronisée avec l'écrou de broche (42).

20. Unité de transmission mécanique pour entrainement linéaire d'après au moins une des revendications de 16 à 19, caractérisée en ce que la bande d'occlusion (100) est conduite à côté de l'élément de raccordement (29) et qu'elle est logée, des deux côtés de celui-ci, dans le creux de logement (101), où de préférence est respectivement prévu des deux côtés de l'élément de raccordement (29) un moyen de guidage de bande (105).

21. Unité de transmission mécanique pour entrainement linéaire d'après au moins une des revendications de 16 à 20, caractérisée en ce que le creux de logement (101) présente un aspect essentiellement en forme de rainure avec deux parois latérales (103) et un fond (102) avec lequel est jointe l'encoche longitudinale (30), les parois latérales (103) présentant respectivement, de préférence dans un domaine terminal opposé au fond, une saillie (104) notamment du genre nervure, l'écart (U) entre les saillies (104) et le fond (102) du creux de logement (101) étant supérieur à l'épaisseur (T) de la bande d'occlusion (100), de préférence l'écart (V) entre les deux parois latérales (103) étant supérieur à la largeur de la bande d'occlusion (100) et notamment la bande d'occlusion (100) présentant une largeur supérieure à l'écart (V) entre les deux parois latérales (103), de sorte que la bande d'occlusion (100) est coincée élastiquement entre les deux parois latérales (103).
